# EUROPEAN PATENT APPLICATION

(11) **EP 4 534 323 A1**
(43) Date of publication of application: **09.04.2025**
(21) Application number: 22948500.8
(22) Date of filing: 30.06.2022
(51) Int. Cl.: B60L 3/12, B60W 30/182, B60L 58/12

(54) **CONTROL METHOD AND DEVICE, AND VEHICLE**

(71) Applicant: Shenzhen Yinwang Intelligent Technologies Co., Ltd., Shenzhen, Guangdong 518129 (CN)
(72) Inventor: GUO, Zhenhua, Shenzhen, Guangdong 518129 (CN); LIU, Donghui, Shenzhen, Guangdong 518129 (CN); ZHOU, Guozhu, Shenzhen, Guangdong 518129 (CN); ZHANG, Siliang, Shenzhen, Guangdong 518129 (CN)
(74) Representative: Pfenning, Meinig & Partner mbB
(86) International application number: PCT/CN2022/102789
(87) International publication number: WO 2024/000391

(57) **Abstract**

Embodiments of this application provide a control method and apparatus, and a vehicle. The method includes: obtaining a state of charge of a battery; determining a first range of a vehicle in a first mode based on the state of charge; and when the first range is less than or equal to a first distance and a second range is greater than the first distance, controlling to switch a mode of the vehicle from the first mode to a second mode. The first distance is determined based on a target mileage of the vehicle, and the second range is a range corresponding to the state of charge of the vehicle in the second mode. Embodiments of this application can be applied to an intelligent vehicle or an electric vehicle, to help reduce a risk caused by an insufficient range, thereby helping improve driving experience of a user.

## Description

### TECHNICAL FIELD

Embodiments of this application relate to the field of intelligent driving, and more specifically, to a control method and apparatus, and a vehicle.

### BACKGROUND

With development of electric vehicle technologies, more people choose electric vehicles as transportation tools. However, mileage anxieties of the electric vehicles always cause poor user experience. For example, when a user makes a travel arrangement based on a range displayed on a dashboard, the travel arrangement may actually fail to be implemented in a vehicle mode selected by the user. Therefore, how to reduce a risk caused by an insufficient range becomes an urgent problem to be resolved.

### SUMMARY

Embodiments of this application provide a control method and apparatus, and a vehicle, to help reduce a risk caused by an insufficient range, thereby helping improve driving experience of a user.

A vehicle (sometimes referred to as a vehicle for short) in this application is a vehicle in a broad sense, and may be a transport means (for example, a car, a truck, a motorcycle, a train, an airplane, or a ship), an industrial vehicle (for example, a pallet truck, a trailer, or a tractor), an engineering vehicle (for example, an excavator, a bulldozer, or a crane), an agricultural device (for example, a lawn mower or a harvester), an amusement device, a toy vehicle, and the like. A type of the vehicle is not limited in embodiments of this application.

According to a first aspect, a control method is provided. The method includes: obtaining a state of charge of a battery; determining a first range of a vehicle in a first mode based on the state of charge; and when the first range is less than or equal to a first distance and a second range is greater than the first distance, controlling to switch a mode of the vehicle from the first mode to a second mode. The first distance is determined based on a target mileage of the vehicle, and the second range is a range corresponding to the state of charge of the vehicle in the second mode.

In embodiments of this application, the first range and the second range that corresponds to the state of charge in the first mode and the second mode are separately computed. When the first range is less than or equal to the first distance and the second range is greater than the first distance, the vehicle can be controlled to switch from the first mode to the second mode. This helps reduce a risk caused by an insufficient range, thereby helping improve driving experience of a user.

In some possible implementations, the first distance may be the target travel distance, the first distance may be a sum of the target travel distance and a preset distance value, or the first distance may be a product of the target travel distance and a preset magnification.

In some possible implementations, the target mileage may be a mileage that the vehicle is to travel when the vehicle travels from a current location to a destination, or the target mileage may be a mileage determined based on a historical travel record of the vehicle.

With reference to the first aspect, in some implementations of the first aspect, the second mode is a mode that is more power-saving than the first mode.

In some possible implementations, the first mode is a non-ECO mode or a non-power-saving mode (for example, the first mode may be a sport mode or a comfort mode), and the second mode is an ECO mode or a power-saving mode.

In some possible implementations, the first mode and the second mode may alternatively be different sub-modes of a mode.

For example, the first mode is a sub-mode 1 in the power-saving mode, and the second mode is a sub-mode 2 in the power-saving mode. For example, in the sub-mode 1, air conditioning or an atmosphere lamp may be allowed to be used. In the sub-mode 2, air conditioning or an atmosphere lamp cannot be used.

In some possible implementations, the first mode and the second mode may alternatively be user-defined modes.

For example, the user may set a type of a power-consuming device allowed to be used in the first mode and the second mode. For example, the user may set that, in the first mode, the air conditioning, the atmosphere lamp, and a backseat entertainment screen may be used, and the user may set that, in the second mode, a backseat entertainment screen may be used, but the air conditioning and the atmosphere lamp cannot be used.

For another example, the user may set speed limit values of the vehicle in the first mode and the second mode. For example, the user may set the speed limit value in the first mode to 90 km/h, and may set the speed limit value in the second mode to 60 km/h.

In some possible implementations, the first mode may be a mode in which a plurality of power-consuming devices (for example, the air conditioning, the atmosphere lamp, a central display screen, a passenger entertainment screen, a backseat entertainment screen) are all allowed to be turned on. The second mode may be a mode in which some of a plurality of power-consuming devices are allowed to be turned on.

With reference to the first aspect, in some implementations of the first aspect, the method further includes: when an operation of entering the destination by the user is detected, determining the first distance based on the destination; or receiving information about the destination sent by an electronic device, and determining the first distance based on the destination.

In embodiments of this application, when the vehicle can obtain navigation information, the first distance can be determined, by detecting the operation of entering the destination by the user or when the vehicle receives the information about the destination sent by the electronic device, based on the destination. In this way, the vehicle can compare the range in the first mode and the range in the second mode with the first distance. When the first range is less than or equal to the first distance and the second range is greater than the first distance, the vehicle can be controlled to switch from the first mode to the second mode. This helps reduce a risk caused by an insufficient range, thereby helping improve driving experience of the user.

In some possible implementations, the determining the first distance based on the destination includes: determining the target mileage based on the destination; and determining the first distance based on the target mileage.

With reference to the first aspect, in some implementations of the first aspect, the method further includes: obtaining a first location of the vehicle; determining, based on a historical travel record, one or more mileages that the vehicle is to travel when departing from the first location; and determining the first distance based on the one or more mileages.

In embodiments of this application, when the vehicle cannot obtain navigation information, the first distance may be determined based on the historical travel record of the vehicle. In this way, the vehicle can compare the range in the first mode and the range in the second mode with the first distance. When the first range is less than or equal to the first distance and the second range is greater than the first distance, the vehicle can be controlled to switch from the first mode to the second mode. This helps reduce a risk caused by an insufficient range, thereby helping improve driving experience of the user.

In some possible implementations, the historical travel record includes information about a subtotal mileage.

With reference to the first aspect, in some implementations of the first aspect, the determining, based on a historical travel record, one or more mileages that the vehicle is to travel when departing from the first location includes: determining, based on the historical travel record, the one or more mileages that the vehicle is to travel when departing from the first location in a preset time period.

In embodiments of this application, when the vehicle cannot obtain the navigation information, the first distance can be further determined with reference to the one or more mileages that the vehicle is to travel when departing from the first location in the preset time period. In this way, the vehicle can obtain more accurate information about the first distance. This helps further reduce a risk caused by an insufficient range, thereby helping improve driving experience of the user.

In some possible implementations, a moment at which the vehicle is located at the first location is a first moment. The first moment is in the preset time period.

With reference to the first aspect, in some implementations of the first aspect, the determining the first distance based on the one or more mileages includes: determining the first distance based on identity information of a driver and the one or more mileages.

In embodiments of this application, when the vehicle cannot obtain the navigation information, the first distance can be further determined with reference to the identify information of the user and the one or more mileages. In this way, the vehicle can obtain more accurate information about the first distance. This helps further reduce a risk caused by an insufficient range, thereby helping improve driving experience of the user.

With reference to the first aspect, in some implementations of the first aspect, the method further includes: determining that the state of charge is less than or equal to a preset battery level threshold.

In embodiments of this application, when the state of charge is greater than the preset battery level threshold, the vehicle may keep traveling in a current mode. When the state of charge is less than or equal to the preset battery level threshold, the vehicle may compare the range in the first mode and the range in the second mode with the first distance. In this way, resource overheads of the vehicle can be reduced, to help reduce power consumption of the vehicle.

For example, the preset battery level threshold is a first state of charge threshold. The first state of charge threshold is 80%.

In some possible implementations, the vehicle may switch from the first mode to a third mode when the state of charge is less than or equal to a second state of charge threshold. The third mode is the ECO mode or the power-saving mode.

In embodiments of this application, when the state of charge is less than or equal to the second state of charge threshold, the vehicle can be directly controlled to enter the ECO mode or the power-saving mode, without computing the range in the first mode and a range in another mode. This helps reduce a risk of that the vehicle cannot travel due to a low state of charge. In addition, when the vehicle is on a highway, the vehicle can be prevented from stopping in an overtaking lane due to a very low state of charge. This helps improve safety of a driver and a passenger, thereby helping to improve driving experience of the user.

With reference to the first aspect, in some implementations of the first aspect, the method further includes: when the first range is less than or equal to the first distance and the second range is greater than the first distance, controlling a prompt apparatus to prompt the user to switch the mode of the vehicle from the first mode to the second mode. The controlling to switch a mode of the vehicle from the first mode to a second mode includes: when an operation of switching the mode of the vehicle from the first mode to the second mode by the user is detected, controlling to switch the mode of the vehicle from the first mode to the second mode.

In embodiments of this application, when the first range is less than or equal to the first distance and the second range is greater than the first distance, the prompt apparatus can be controlled to prompt the user to switch the first mode to the second mode. In this way, the user can learn in time that mode switching needs to be performed. This helps reduce a risk caused by an insufficient range, thereby helping improve driving experience of the user.

According to a second aspect, a control apparatus is provided. The apparatus includes: an obtaining unit, configured to obtain a state of charge of a battery; a determining unit, configured to determine a first range of a vehicle in a first mode based on the state of charge; and a control unit, configured to: when the first range is less than or equal to a first distance and a second range is greater than the first distance, control to switch a mode of the vehicle from the first mode to a second mode. The first distance is determined based on a target mileage of the vehicle, and the second range is a range corresponding to the state of charge of the vehicle in the second mode.

With reference to the second aspect, in some implementations of the second aspect, the apparatus further includes a detection unit. The determining unit is specifically configured to: when the detection unit detects an operation of entering a destination by a user, determine the first distance based on the destination. Alternatively, the apparatus further includes a receiving unit. The determining unit is specifically configured to: when the receiving unit receives information about a destination sent by an electronic device, determine the first distance based on the destination.

With reference to the second aspect, in some implementations of the second aspect, the obtaining unit is further configured to obtain a first location of the vehicle. The determining unit is further configured to determine, based on a historical travel record, one or more mileages that the vehicle is to travel when departing from the first location. The determining unit is further configured to determine the first distance based on the one or more mileages.

With reference to the second aspect, in some implementations of the second aspect, the determining unit is specifically configured to: determine, based on the historical travel record, the one or more mileages that the vehicle is to travel when departing from the first location in a preset time period.

With reference to the second aspect, in some implementations of the second aspect, the determining unit is specifically configured to determine the first distance based on identity information of a driver and the one or more mileages.

With reference to the second aspect, in some implementations of the second aspect, the determining unit is further configured to determine that the state of charge is less than or equal to a preset battery level threshold.

With reference to the second aspect, in some implementations of the second aspect, the control unit is specifically configured to: when the first range is less than or equal to the first distance and the second range is greater than the first distance, control a prompt apparatus to prompt the user to switch the mode of the vehicle from the first mode to the second mode; and when an operation of switching the mode of the vehicle from the first mode to the second mode by the user is detected, control to switch the mode of the vehicle from the first mode to the second mode.

With reference to the second aspect, in some implementations of the second aspect, the second mode is a mode that is more power-saving than the first mode.

According to a third aspect, an apparatus is provided. The apparatus includes a processing unit and a storage unit. The storage unit is configured to store instructions. The processing unit executes the instructions stored in the storage unit, to enable the apparatus to perform any possible method according to the first aspect.

According to a fourth aspect, a controller is provided. The vehicle control unit includes a processing unit and a storage unit. The storage unit is configured to store instructions. The processing unit executes the instructions stored in the storage unit, to enable the apparatus to perform any possible method according to the first aspect.

With reference to the fourth aspect, in some implementations of the fourth aspect, the controller is a vehicle control unit.

With reference to the fourth aspect, in some implementations of the fourth aspect, the controller includes a vehicle control unit and a cockpit domain controller.

Optionally, the processing unit may include at least one processor, and the storage unit may be a memory. The memory may be a storage unit (for example, a register or a cache) in a chip, or may be a storage unit (for example, a read-only memory or a random access memory), that is outside a chip, in a transport means.

According to a fifth aspect, a terminal is provided. The terminal includes the apparatus according to any one of the second aspect and the third aspect.

With reference to the fifth aspect, in some implementations of the fifth aspect, the terminal is a vehicle. When the terminal is a vehicle, the vehicle may include the apparatus according to any one of the second aspect and the third aspect, or include the controller according to the fourth aspect.

According to a sixth aspect, a server is provided. The server includes the apparatus according to any one of the second aspect and the third aspect.

In some possible implementations, the server may be a virtual server, or the server may be a physical server.

According to a seventh aspect, a computer program product is provided. The computer program product includes computer program code. When the computer program code is run on a computer, the computer is enabled to perform any possible method according to the first aspect.

It should be noted that all or some of the computer program code may be stored in a first storage medium. The first storage medium may be encapsulated together with a processor, or may be encapsulated separately from a processor. This is not specifically limited in embodiments of this application.

According to an eighth aspect, a computer-readable medium is provided. The computer-readable medium stores program code. When the computer program code is run on a computer, the computer is enabled to perform any possible method according to the first aspect.

According to a ninth aspect, an embodiment of this application provides a chip system. The chip system includes a processor, configured to invoke a computer program or computer instructions stored in a memory, to enable the processor to perform any possible method according to the first aspect.

With reference to the ninth aspect, in a possible implementation, the processor is coupled to the memory through an interface.

With reference to the ninth aspect, in a possible implementation, the chip system further includes a memory. The memory stores a computer program or computer instructions.

### BRIEF DESCRIPTION OF DRAWINGS

FIG. 1 is a functional block diagram of a vehicle according to an embodiment of this application;
FIG. 2(a) to FIG. 2(d) show a group of graphical user interfaces GUIs according to an embodiment of this application;
FIG. 3(a) to FIG. 3(d) show another group of GUIs according to an embodiment of this application;
FIG. 4 shows another GUI according to an embodiment of this application;
FIG. 5(a)-1 to FIG. 5(c)-3 show another group of GUIs according to an embodiment of this application;
FIG. 6(a) and FIG. 6(b) show another group of GUIs according to an embodiment of this application;
FIG. 7 shows another group of GUIs according to an embodiment of this application;
FIG. 8 is a diagram of a system architecture according to an embodiment of this application;
FIG. 9 is a schematic flowchart of a method for determining whether to switch from a current mode to an ultra power-saving mode according to an embodiment of this application;
FIG. 10 is another schematic flowchart of a method for determining whether to switch from a current mode to an ultra power-saving mode according to an embodiment of this application;
FIG. 11A to FIG. 11C are another schematic flowchart of a method for determining whether to switch from a current mode to an ultra power-saving mode according to an embodiment of this application;
FIG. 12 is a schematic flowchart of a control method according to an embodiment of this application; and
FIG. 13 is a block diagram of a control apparatus according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

Prefix words such as "first" and "second" in embodiments of this application are merely intended to distinguish between different described objects, and impose no limitation on locations, rankings, priorities, quantities, content, or the like of the described objects. In embodiments of this application, use of the prefix words used to distinguish between the described objects, such as ordinal numbers, constitutes no limitation on the described objects. For descriptions of the described object, refer to context descriptions in claims or embodiments. Use of the prefix words should not constitute a redundant limitation. In addition, in the descriptions of embodiments, unless otherwise specified, "a plurality of" means two or more than two.

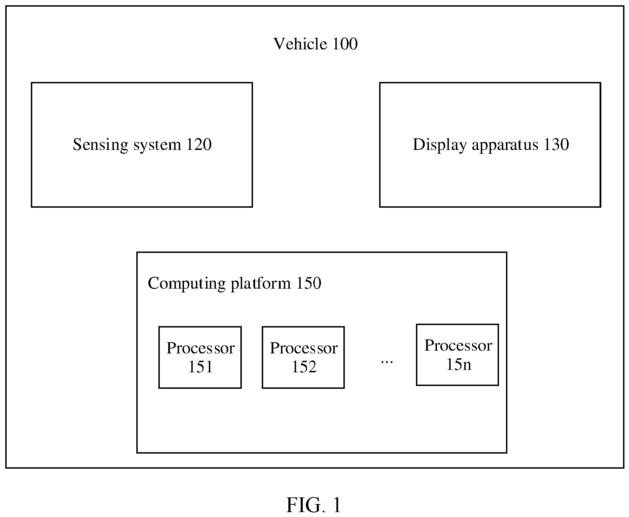

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about an environment surrounding the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, millimeter wave radar, an ultrasonic radar, and an image shooting apparatus.

Some or all of functions of the vehicle 100 may be controlled by the computing platform 150. The computing platform 150 may include processors 151 to 15n (n is a positive integer). The processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), a digital signal processor (digital signal processor, DSP), or the like. In another implementation, the processor may implement a function by using a logical relationship of a hardware circuit. The logical relationship of the hardware circuit is fixed or reconfigurable. For example, the processor is an application-specific integrated circuit (application-specific integrated circuit, ASIC) or a hardware circuit, for example, an FPGA, implemented by a programmable logic device (programmable logic device, PLD). In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit DPU). In addition, the computing platform 150 may further include a memory. The memory is configured to store instructions. Some or all of the processors 151 to 15n may invoke the instructions in the memory, and execute the instructions, to implement a corresponding function.

The display apparatus 130 in a cockpit is mainly classified into two categories: a vehicle-mounted display screen and a projection display screen like a head-up display (head-up display, HUD). The vehicle-mounted display screen is a physical display screen, and is an important constituent part of an in-vehicle infotainment system. A plurality of display screens may be disposed in the cockpit, such as a digital instrument display screen, a central display screen, a display screen in front of a passenger on a passenger seat (also referred to as a front passenger), a display screen in front of a left rear passenger, and a display screen in front of a right rear passenger. A window may be even used as a display for display. The head-up display, also referred to as a head-up display system, is mainly configured to display driving information such as a speed per hour and navigation on a display device (for example, a windshield) in front of a driver, to reduce line of sight transfer duration of the driver, avoid a pupil change caused by line of sight transfer of the driver, and improve driving safety and comfort. For example, the HUD includes a combiner head-up display (combiner HUD, C-HUD) system, a windshield head-up display (windshield HUD, W-HUD) system, an augmented reality head-up display (augmented reality HUD, AR-HUD) system.

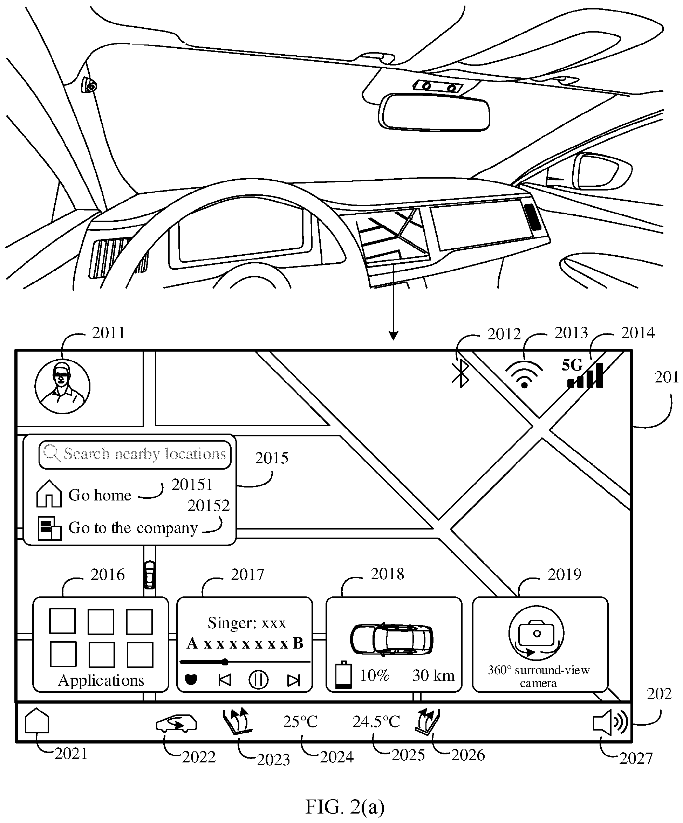

FIG. 2(a) to FIG. 2(d) show a group of graphical user interfaces (graphical user interfaces, GUIs) according to an embodiment of this application.

As shown in FIG. 2(a), a vehicle may display a display interface 201 and a function bar 202 of an in-vehicle map application through a central display screen. The display interface 201 includes avatar information 2011 of a user account logged in on the vehicle, a Bluetooth function icon 2012, a Wi-Fi function icon 2013, a cellular network signal icon 2014, an in-vehicle map application search box 2015, a card 2016 for switching to display a plurality of applications installed on the vehicle, a card 2017 for switching to display an in-vehicle music application, a state of charge of a vehicle and remaining mileage display card 2018, a vehicle 360 degrees (°) surround-view camera function display card 2019. The in-vehicle map application search box 2015 may include a "Go home" control 20151 and a "Go to the company" control 20152. The function bar 202 includes an icon 2021 for switching to display a desktop of the large central display screen, a vehicle inside air icon 2022, and a driver seat heating function icon 2023, a driver area air conditioning temperature display icon 2024, a passenger area air conditioning temperature display icon 2025, a passenger seat heating function icon 2026, and a volume setting icon 2027.

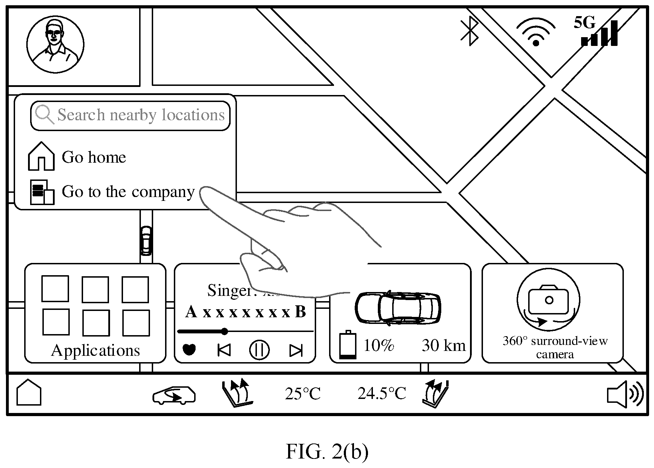

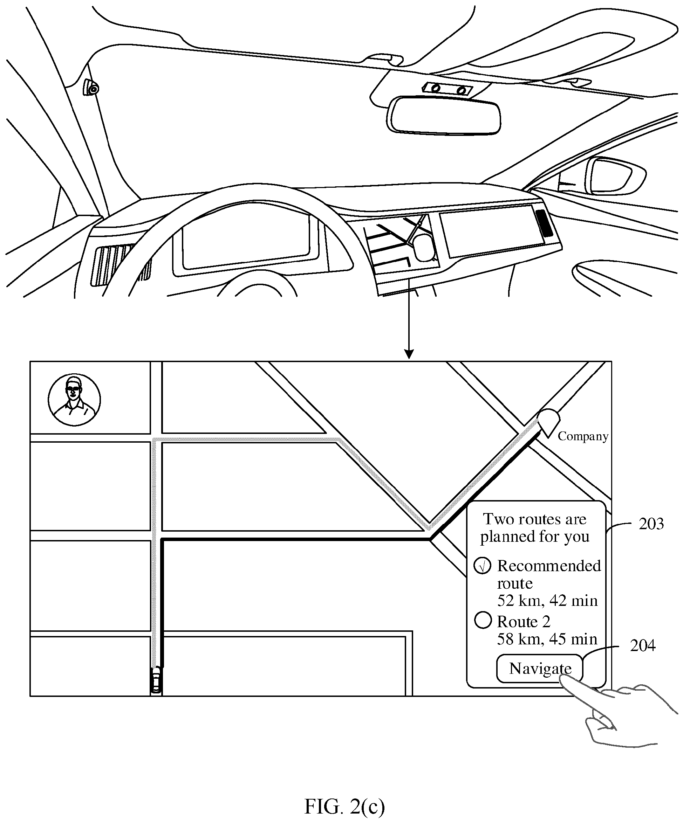

As shown in FIG. 2(b) and FIG. 2(c), when detecting an operation of tapping the control 20152 by a user, the vehicle may display a prompt box 203 through the large central display screen. The prompt box 203 includes a "Navigate" control 204 and a route that is planned by the in-vehicle map application for the user and that is from a current location of the vehicle to a company. For example, the in-vehicle map application plans two routes for the user, including a recommended route (a total distance from the current location to the company is 52 km and travel duration is 42 min) and a route 2 (a total distance from the current location to the company is 58 km and travel duration is 45 min).

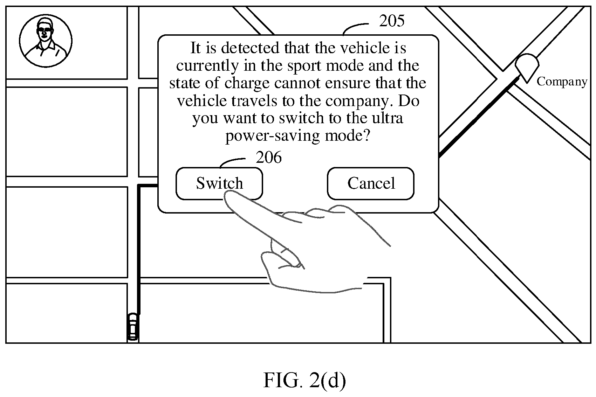

As shown in FIG. 2(d), the vehicle may display information about the recommended route when detecting an operation of tapping the control 204 by the user. In this case, the vehicle may obtain information (for example, 52 km) about a target mileage of the vehicle from the current location to the company. The vehicle is in a sport mode, and a range corresponding to a state of charge (for example, 10%) of the vehicle in the sport mode is 30 kilometers (kilometers, km). The range in the sport mode is less than a first distance (for example, the first distance may be equal to the target mileage). Therefore, the vehicle may determine that the company cannot be reached through travel in the sport mode. A prompt box 205 may be displayed through the central display screen when a range corresponding to the state of charge of the vehicle in an ultra power-saving mode is 65 km and the range in the ultra power-saving mode is greater than the first distance. The prompt box 205 includes prompt information "It is detected that the vehicle is currently in the sport mode and the state of charge cannot ensure that the vehicle travels to the company. Do you want to switch to the ultra power-saving mode?", a "Switch" control 206, and a "Cancel" control. When the vehicle detects an operation of tapping the control 206 by the user, a mode of the vehicle may be switched from the sport mode to the ultra power-saving mode.

In an embodiment, the vehicle may determine the target mileage based on information about a destination, and determine the first distance based on the target mileage. The first distance may be the target mileage, or the first distance may be a sum of the target mileage and a preset distance, or the first distance may be a product of the target mileage and a preset magnification.

In an embodiment, when detecting the information about the destination entered by the user, the vehicle may send historical power consumption information of the vehicle and the information about the destination to a map server. The map server may determine the target mileage based on the historical power consumption information of the vehicle and the information about the destination. In this way, information that is about the target mileage and that is obtained by the map server through computation may be more accurate. This helps further reduce a risk caused by an insufficient range to the user, thereby helping improve driving experience of the user.

For example, the historical power consumption information of the vehicle may include power consumption information obtained when the vehicle previously travels to the company through the recommended route.

In an embodiment, the vehicle may compare the range in the sport mode and the range in the ultra power-saving mode with the target mileage, or the vehicle may compare the range in the sport mode and the range in the ultra power-saving mode with the first distance determined based on the target mileage. For example, the first distance may be the sum of the target mileage and the preset distance, or the first distance may be the product of the target mileage and the preset magnification.

For example, the target mileage may be 60 km, and the preset distance is 10 km. In this case, the first distance may be 70 km. The vehicle may also prompt the user to switch to the ultra power-saving mode if the range corresponding to the state of charge of the vehicle in the sport mode is 65 km and the range corresponding to the state of charge of the vehicle in the ultra power-saving mode is 90 km.

The ultra power-saving mode is merely an example, and the ultra power-saving mode may also be referred to as a power-saving mode or an ECO mode.

In embodiments of this application, when the vehicle can obtain navigation information, the vehicle can determine the first distance by detecting an operation of entering the destination by the user. In this way, the vehicle can compare the range in the sport mode and the range in the ultra power-saving mode with the first distance. When a first range is less than or equal to the first distance and a second range is greater than the first distance, the vehicle can be controlled to switch from the sport mode to the ultra power-saving mode. This helps reduce a risk caused by an insufficient range, thereby helping improve driving experience of the user.

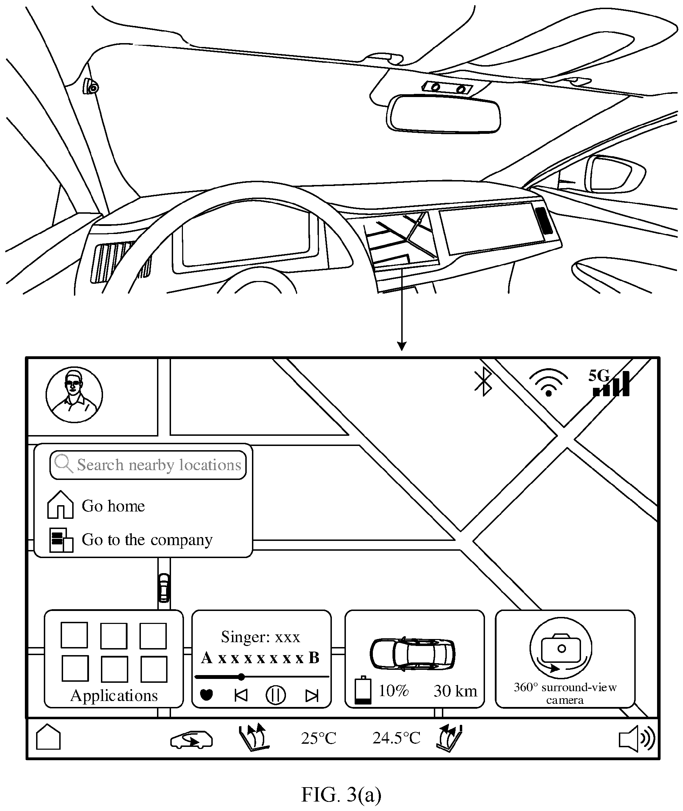

With reference to FIG. 2(a) to FIG. 2(d), the foregoing describes a process in which the vehicle determines the first distance after detecting the operation of manually entering the destination by the user. With reference to GUIs shown in FIG. 3(a) to FIG. 3(d), the following describes, by using information about a destination sent by an electronic device, a process of determining a first distance.

FIG. 3(a) to FIG. 3(d) show another group of GUIs according to an embodiment of this application.

As shown in FIG. 3(a), a vehicle displays a display interface and a function bar of an in-vehicle map application through a central display screen. The destination entered by the user by using the map application on a mobile phone is a school A. When the mobile phone detects that a user unlocks the vehicle and is in the vehicle, the mobile phone may send the information about the destination to the vehicle.

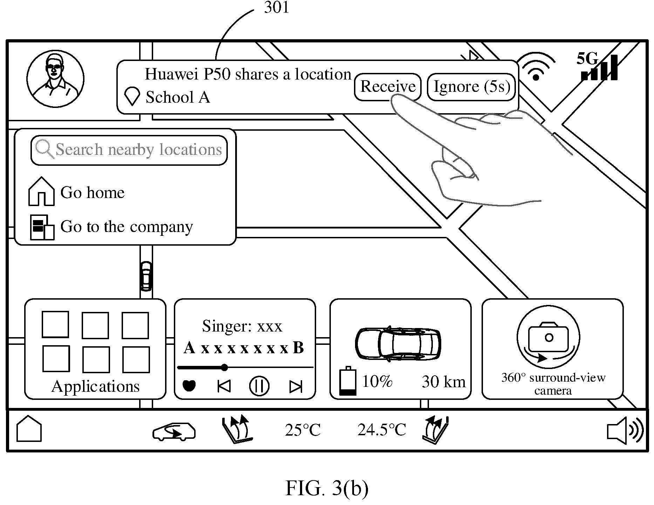

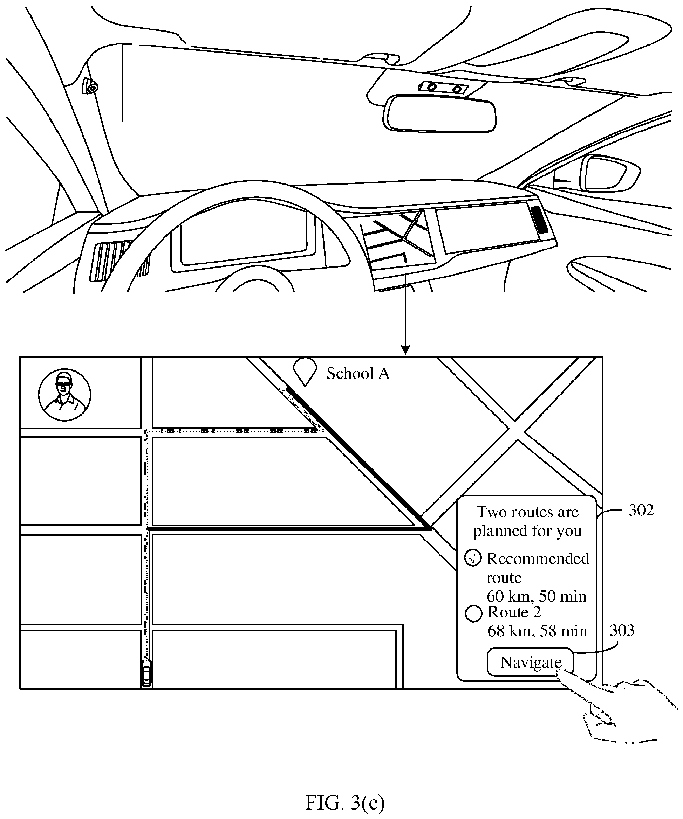

As shown in FIG. 3(b), after receiving the information about the destination sent by the mobile phone, the vehicle may display a prompt box 301 through the central display screen. The prompt box 301 includes prompt information "Huawei P50 shares a location, namely, the school A", a "Receive" control, and an "Ignore" control. When an operation of tapping the "Receive" control by the user is detected, a GUI shown in FIG. 3(c) may be displayed through the central control screen.

As shown in FIG. 3(c), when detecting the operation of tapping the "Receive" control by the user, the vehicle may display a prompt box 302 through the central display screen. The prompt box 302 includes a "Navigate" control 303 and a route that is from a current location of the vehicle to the school A and that is planned by the in-vehicle map application for the user. For example, the in-vehicle map application plans two routes for the user, including a recommended route (a total distance from the current location to the school A is 60 km and travel duration is 50 min) and a route 2 (a total distance from the current location to the school A is 68 km and travel duration is 58 min).

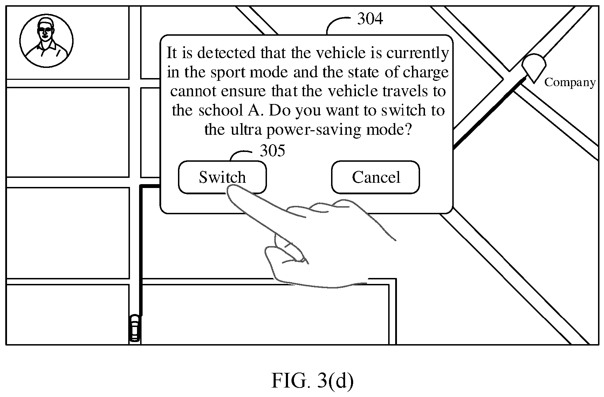

As shown in FIG. 3(d), the vehicle may display information about the recommended route when detecting an operation of tapping the control 303 by the user. In this case, the vehicle may obtain information (for example, 60 km) about a target mileage of the vehicle from the current location to the school A. The vehicle is in a sport mode, and a range corresponding to a state of charge (for example, 10%) of the vehicle in the sport mode is 30 km. The range in the sport mode is less than the first distance (for example, the first distance may be equal to the target mileage). Therefore, the vehicle may determine that the school A cannot be reached through travel in the sport mode. A prompt box 304 may be displayed through the central display screen when a range corresponding to the state of charge of the vehicle in an ultra power-saving mode is 65 km and the range in the ultra power-saving mode is greater than the first distance. The prompt box 304 includes prompt information "It is detected that the vehicle is currently in the sport mode and the state of charge cannot ensure that the vehicle travels to the school A. Do you want to switch to the ultra power-saving mode?", a "Switch" control 305, and a "Cancel" control. When the vehicle detects an operation of tapping the control 305 by the user, a mode of the vehicle may be switched from the sport mode to the ultra power-saving mode.

In the foregoing descriptions, the central display screen displays a prompt box, to prompt the user to switch the mode of the vehicle from the sport mode to the ultra power-saving mode. A manner of prompting the user in embodiments of this application is not limited thereto. For example, the user may be prompted in one or more of the following prompt manners: displaying the prompt box on the central display screen, displaying prompt information on a dashboard, prompting the user to switch to the ultra power-saving mode by voice, changing a color of an atmosphere lamp, vibrating a steering wheel, and enabling a camera.

In embodiments of this application, when the vehicle can obtain navigation information, the first distance is determined by receiving the information about the destination sent by the electronic device. In this way, the vehicle can compare the range in the sport mode and the range in the ultra power-saving mode with the first distance. When a first range is less than or equal to the first distance and a second range is greater than the first distance, the vehicle can be controlled to switch from the sport mode to the ultra power-saving mode. This helps reduce a risk caused by an insufficient range, thereby helping improve driving experience of the user.

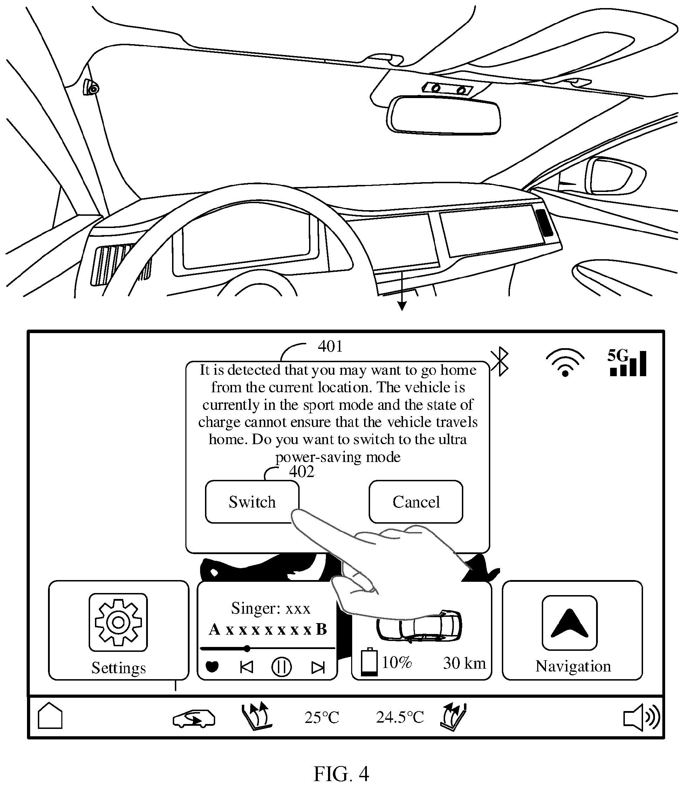

With reference to the GUIs shown in FIG. 2(a) to FIG. 3(d), the foregoing describes the process of determining the first distance by using the navigation information in embodiments of this application. The following describes, by using a GUI shown in FIG. 4, a process of determining a first distance when there is no navigation information.

FIG. 4 shows another GUI according to an embodiment of this application.

As shown in FIG. 4, after the vehicle is powered on, a current location of the vehicle (for example, the vehicle is currently located near an xx building) may be obtained by using a positioning system. The vehicle may determine, based on information about a subtotal mileage stored in the vehicle, a target mileage that the vehicle may need to travel when the vehicle departs from the xx building.

For example, within one month, the vehicle departs 20 times from a start location that is the xx building, including 13 times that the destination is a home, five times that the destination is a restaurant A, and two times that the destination is a school A. In this case, the vehicle may predict that a destination of a current travel may be the home. In this way, the vehicle may obtain a target mileage (for example, the target mileage is 40 km) from the xx building to the home based on map information stored in the vehicle or the information about the subtotal mileage.

If the vehicle is in a sport mode after being powered on, a range corresponding to a state of charge (for example, 10%) of the vehicle in the sport mode is 30 km. The range in the sport mode is less than the first distance (for example, the first distance may be equal to the target mileage). Therefore, the vehicle may determine that a travel task cannot be completed through travel in the sport mode. A prompt box 401 may be displayed through a central display screen when a range corresponding to the state of charge of the vehicle in an ultra power-saving mode is 65 km and the range in the ultra power-saving mode is greater than the first distance. The prompt box 401 includes prompt information "It is detected that you may want to go home from the current location. The vehicle is currently in the sport mode and the state of charge cannot ensure that the vehicle travels home. Do you want to switch to the ultra power-saving mode?", a "Switch" control 402, and a "Cancel" control. When the vehicle detects an operation of tapping the control 402 by the user, a mode of the vehicle may be switched from the sport mode to the ultra power-saving mode.

The vehicle may store, in a historical travel record, a quantity of times of traveling from the xx building to each destination, or the vehicle may store, in a historical mileage, a mileage of each departure from the xx building. For example, within one month, the vehicle departs 20 times from a start location that is the xx building, including 15 times that the vehicle travels a mileage that is 38 km to 40 km, three times that the vehicle travels a mileage that is 8 km to 10 km, and two times that the vehicle travels a mileage that is 60 km to 70 km. In this case, the vehicle may predict that a current target mileage of the vehicle is 40 km. If the vehicle is currently in a sport mode, a range of the vehicle in the sport mode is less than or equal to the first distance (for example, the first distance may be the target mileage), and a range of the vehicle in an ultra power-saving mode is greater than the first distance, the vehicle may display a prompt box through a central display screen. The prompt box may include prompt information "It is detected that you may need to depart from the current location and travel for 40 km. The vehicle is currently in the sport mode, and the state of charge cannot ensure that the vehicle completes the travel task. Do you want to switch to the ultra power-saving mode?", a "Switch" control, and a "Cancel" control.

In an embodiment, a travel record obtained when the vehicle departs from a location in a preset time period may be further stored in the historical travel record. For example, Table 1 shows a historical travel record of the vehicle within one month.

**Table 1: Historical travel record**

| Departure location | Time period | Mileage | Quantity of times |
|---|---|---|---|
| xx **community** | 7:00 AM to 9:00 AM | [28 km, 30 km] | 20 |
| | 11:00 AM to 1:00 PM | [10 km, 15 km] | 5 |
| | 9:00 PM to 11:00 PM | [40 km, 45 km] | 3 |
| xx **building** | 11:00 AM to 1:00 PM | [60 km, 70 km] | 2 |
| | 5:00 PM to 7:00 PM | [28 km, 30 km] | 20 |
| | 9:00 PM to 11:00 PM | [70 km, 75 km] | 6 |
| ... | ... | ... | ... |

It should be understood that data recorded in Table 1 is merely an example, and the historical travel record may include more or less data than that in the foregoing table. Embodiments of this application are not limited thereto.

For example, when a location at which the vehicle is powered on is the xx building, and a moment when the vehicle is powered on is 6:00 PM, the vehicle may predict, based on the historical travel record shown in Table 1, that a target mileage of a current travel is 30 km. Alternatively, the target mileage is an average value (for example, an average value 29 km) of 20 mileages during 5:00 PM to 7:00 PM.

For example, Table 2 shows another historical travel record of the vehicle within one month.

**Table 2: Historical travel record**

| Departure location | Time period | Mileage | Quantity of times |
|---|---|---|---|
| xx community | 7:00 AM to 9:00 AM, Monday to Friday | [28 km, 30 km] | 20 |
| | 7:00 AM to 9:00 AM, Saturday or Sunday | [40 km, 45 km] | 8 |
| | 11:00 AM to 1:00 PM, Monday to Sunday | [10 km, 15 km] | 5 |
| | 9:00 PM to 11:00 PM, Monday to Sunday | [40 km, 45 km] | 3 |
| xx building | 11:00 AM to 1:00 PM, Monday to Sunday | [60 km, 70 km] | 2 |
| | 5:00 PM to 7:00 PM, Monday to Thursday | [28 km, 30 km] | 20 |
| | 5:00 PM to 7:00 PM, Friday | [60 km, 65 km] | 4 |
| | 9:00 PM to 11:00 PM, Monday to Sunday | [70 km, 75 km] | 6 |
| ... | ... | ... | ... |

It should be understood that data recorded in Table 2 is merely an example, and the historical travel record may include more or less data than that in the foregoing table. Embodiments of this application are not limited thereto.

For example, when a location at which the vehicle is powered on is the xx building, and a moment when the vehicle is powered on is 6:00 PM on Friday, the vehicle may predict, based on the historical travel record shown in Table 2, that a target mileage of a current travel is 65 km. Alternatively, the target mileage is an average value (for example, an average value 63 km) of 4 mileages during 5:00 PM to 7:00 PM.

In an embodiment, the historical travel record may further include identity information of the user.

For example, Table 3 shows another historical travel record of the vehicle within one month.

**Table 3: Historical travel record**

| User identity | Departure location | Time period | Mileage | Quantity of times |
|---|---|---|---|---|
| User A | xx community | 7:00 AM to 9:00 AM | [28 km, 30 km] | 20 |
| | | 11:00 AM to 1:00 PM | [10 km, 15 km] | 5 |
| | | 9:00 PM to 11:00 PM | [40 km, 45 km] | 3 |
| User A | xx building | 11:00 AM to 1:00 PM | [60 km, 70 km] | 2 |
| | | 5:00 PM to 7:00 PM | [28 km, 30 km] | 20 |
| | | 9:00 PM to 11:00 PM | [70 km, 75 km] | 6 |
| User B | xx community | 7:00 AM to 9:00 AM | [40 km, 45 km] | 10 |
| | | 11:00 AM to 1:00 PM | [15 km, 18 km] | 7 |
| | | 9:00 PM to 11:00 PM | [5 km, 10 km] | 3 |
| ... | ... | ... | ... | ... |

For example, when the vehicle is powered on, an image shooting apparatus (for example, a camera of a driver monitor system (driver monitor system, DMS) or a camera of a cabin monitor system (cabin monitor system, CMS)) in a cockpit may be used to collect image information of a driver area, and determines identity information of a user by using the image information, for example, determines, by using the collected image information, a user in the driver area is a user B. If the current location of the vehicle is the xx community, and a moment at which the vehicle is powered on is 8:00 AM, the vehicle may predict, based on the historical travel record shown in Table 3, that the target mileage is 45 km. Alternatively, the target mileage is an average value (for example, an average value 43 km) of 10 mileages in a period from 7:00 AM to 9:00 AM.

In embodiments of this application, when the vehicle cannot obtain navigation information, the first distance can alternatively be determined with reference to one or more mileages that the vehicle is to travel when departing from the location in the preset time period. In this way, the vehicle can obtain more accurate information about the first distance. This helps further reduce a risk caused by an insufficient range, thereby helping improve driving experience of the user.

With reference to the GUIs shown in FIG. 2(a) to FIG. 4, the foregoing describes a process in which the vehicle determines a relationship between ranges in different modes and the first distance, to prompt the user whether to switch the mode. The following describes a process in which an electronic device (for example, a mobile phone) determines a relationship between ranges in different modes and the first distance, to prompt the user whether to switch a mode.

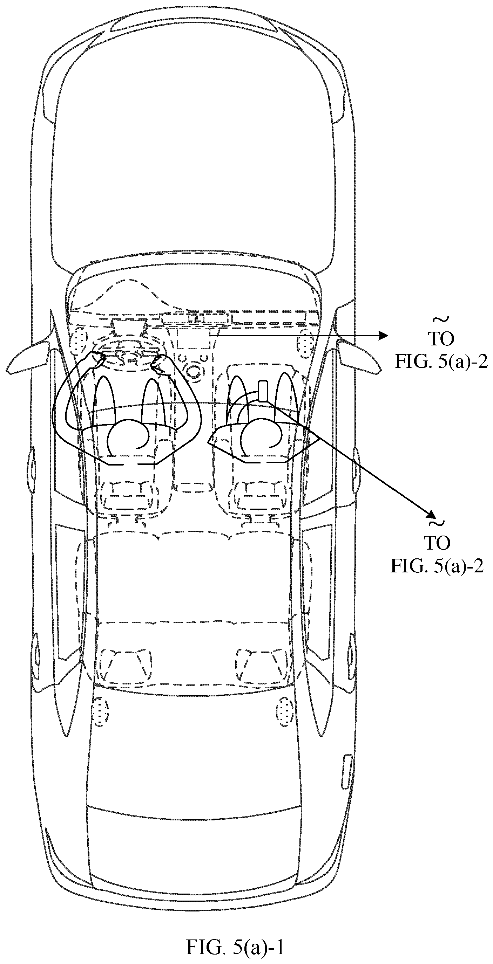

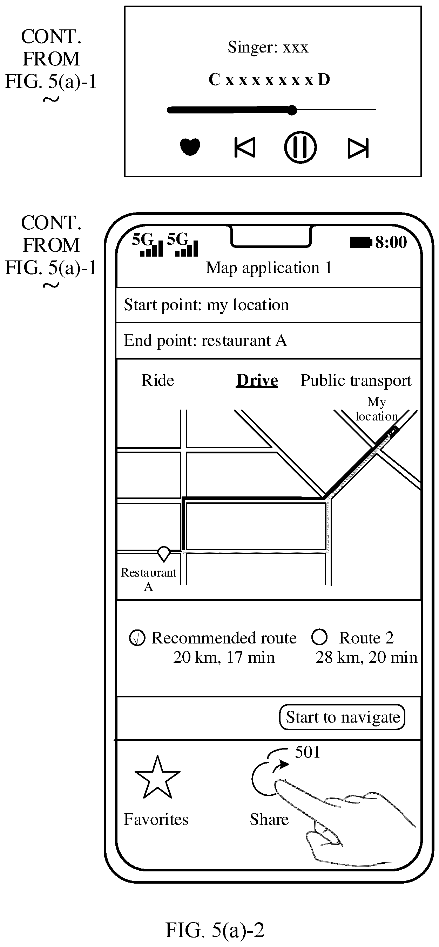

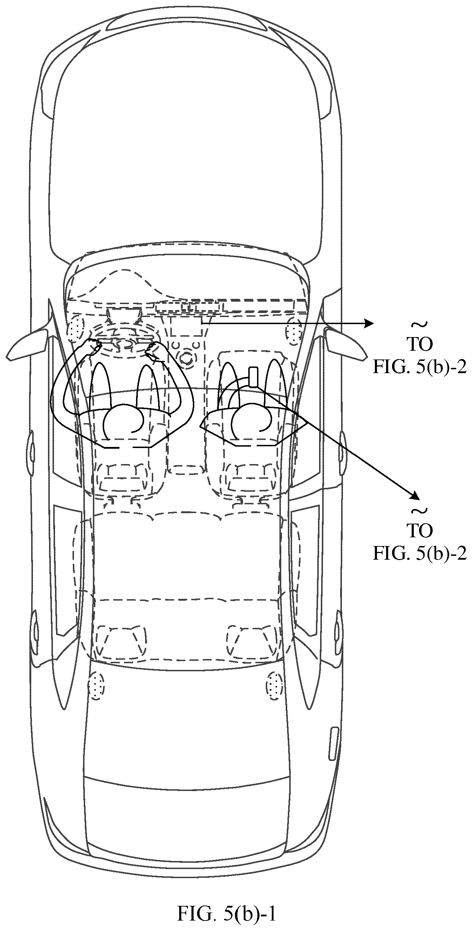

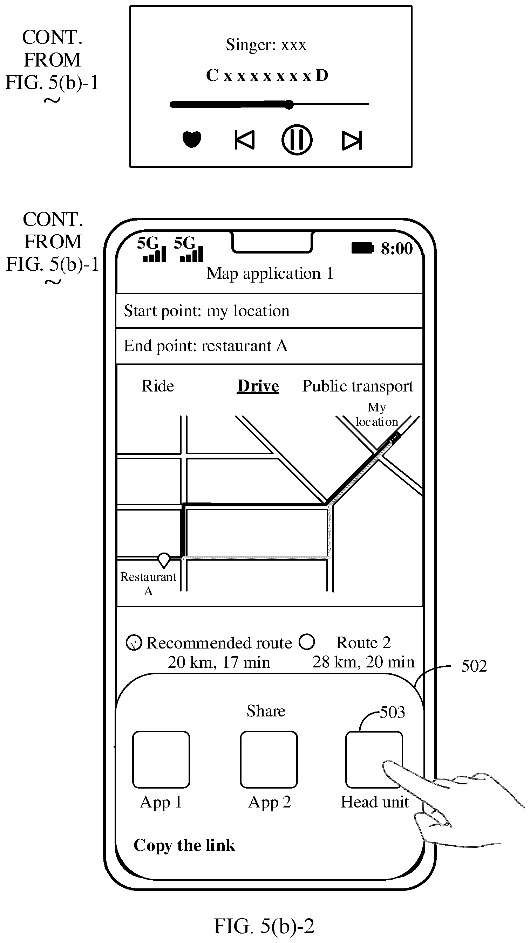

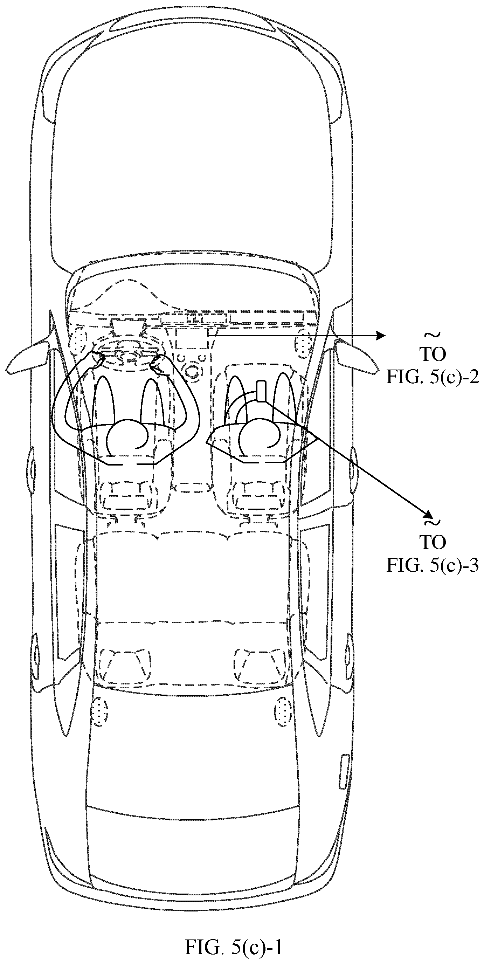

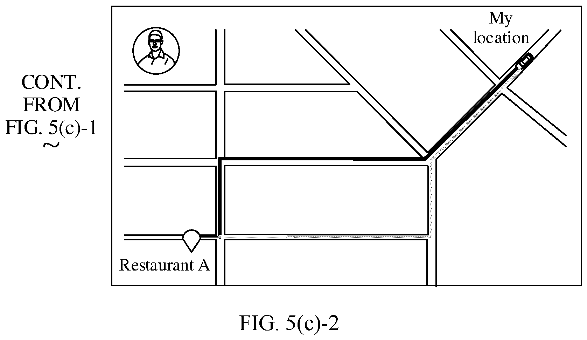

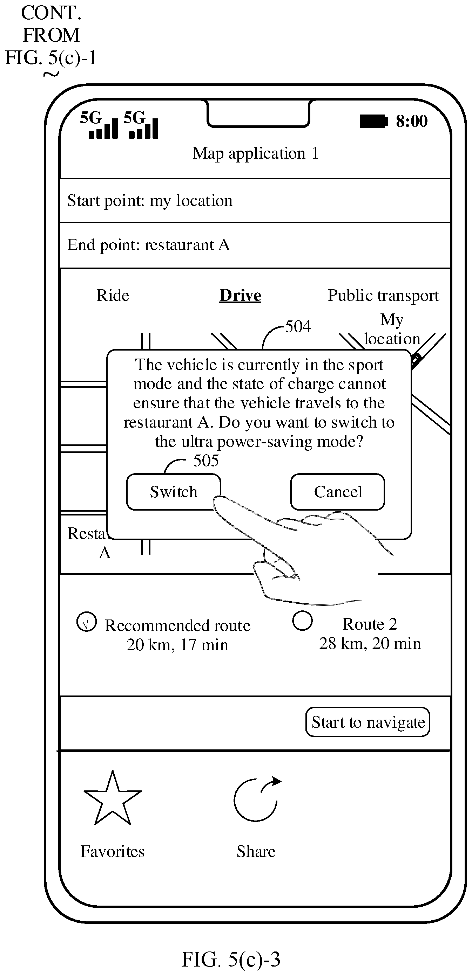

FIG. 5(a)-1 to FIG. 5(c)-3 show another group of GUIs according to an embodiment of this application.

In the GUI shown in FIG. 5(a)-1 and FIG. 5(a)-2, the mobile phone may display a display interface with a navigation route from a current location of the vehicle to a restaurant A in a map application 1. The display interface with the navigation route may include start point information (for example, my location), end point information (for example, a restaurant A), and planned travel routes (for example, a recommended route and a route 2). In addition, the mobile phone may display a "Favorites" control and a "Share" control 501. In this case, a large central display screen of the vehicle displays a music playing interface. The playing interface includes singer information (for example, xxx), lyric information (for example, CxxxxxxxD), a song progress bar, a "Like" control, a "Previous" control, a "Pause" control, and a "Next" control. When the mobile phone detects an operation of tapping the control 501 by a user, the mobile phone may display a GUI shown in FIG. 5(b)-1 and FIG. 5(b)-2.

In a GUI shown in FIG. 5(b)-1 and FIG. 5(b)-2, the mobile phone may display a sharing window 502 in response to a detecting the operation of tapping the control 501 by the user. The sharing window 502 includes an icon of an App 1, an icon of an App 2, an icon 503 of a head unit, and a control corresponding to link copying. When the mobile phone detects an operation of tapping the icon 503 by the user, the mobile phone may send, to the vehicle, location information of the restaurant A and information about the recommended route. In response to receiving the information sent by the mobile phone, the vehicle may display, through the large central display screen, a GUI shown in FIG. 5(c)-1 to FIG. 5(c)-3.

In the GUI shown in FIG. 5(c)-1 to FIG. 5(c)-3, in response to receiving the information sent by the mobile phone, the vehicle may display, through the central display screen, the recommended route navigating to the restaurant A. In addition, the vehicle may further send, to the mobile phone, information about a sport mode that the vehicle is currently in and information about a state of charge. The mobile phone may determine a range in the sport mode based on the sport mode that the vehicle is currently in and the state of charge. The mobile phone may display a prompt box 504 when the range in the sport mode is less than or equal to a first distance and a range in an ultra power-saving mode is greater than the first distance. The prompt box 504 includes prompt information "The vehicle is currently in the sport mode and the state of charge cannot ensure that the vehicle travels to the restaurant A. Do you want to switch to the ultra power-saving mode", a "Switch" control 505, and a "Cancel" control. When the mobile phone detects an operation of tapping the control 505 by the user, the mobile phone may indicate the vehicle to switch from the sport mode to the ultra power-saving mode. In response to receiving the indication of the mobile phone, the vehicle may switch from the sport mode to the ultra power-saving mode.

In embodiments of this application, the user may share information about a destination with the vehicle via the electronic device. After receiving the information about the destination, the vehicle can send, to the electronic device, the information about the current mode and the information about the state of charge. The electronic device determines the relationship between the ranges in the different modes and the first distance. When the range in the current mode is less than or equal to the first distance and the range in the ultra power-saving mode is greater than the first distance, the electronic device may prompt the user whether to switch the mode of the vehicle to the ultra power-saving mode. This helps further reduce a risk caused by an insufficient range, thereby helping improve driving experience of the user.

In an embodiment, the electronic device may further send, to the vehicle, information such as a memo, a flight, and a schedule that are stored by the user in the electronic device. In this way, the vehicle may determine the target mileage based on the information. For example, the user purchases, via the mobile phone, an air ticket with a departure time point being 3:00 PM on Saturday. In this case, after the user gets on the vehicle at 1:00 PM on Saturday, the mobile phone may send information about the air ticket to the vehicle. In this way, the vehicle may determine that the user wants to drive the vehicle to an airport. In this case, the vehicle may determine a relationship between the range in the current mode and the first distance, to determine whether to prompt the user to switch to another more power-saving mode.

In the GUIs shown in FIG. 2(a) to FIG. 5(c)-3, when the range in the current mode is less than or equal to the first distance and the range in the ultra power-saving mode is greater than the first distance, the vehicle or the electronic device can prompt the user to switch from the current mode to the ultra power-saving mode. Embodiments of this application are not limited thereto. When the range in the current mode is less than or equal to the first distance, a range in another mode that is more power-saving than the current mode may be computed, to prompt the user based on a relationship between the range in the another mode and the first distance.

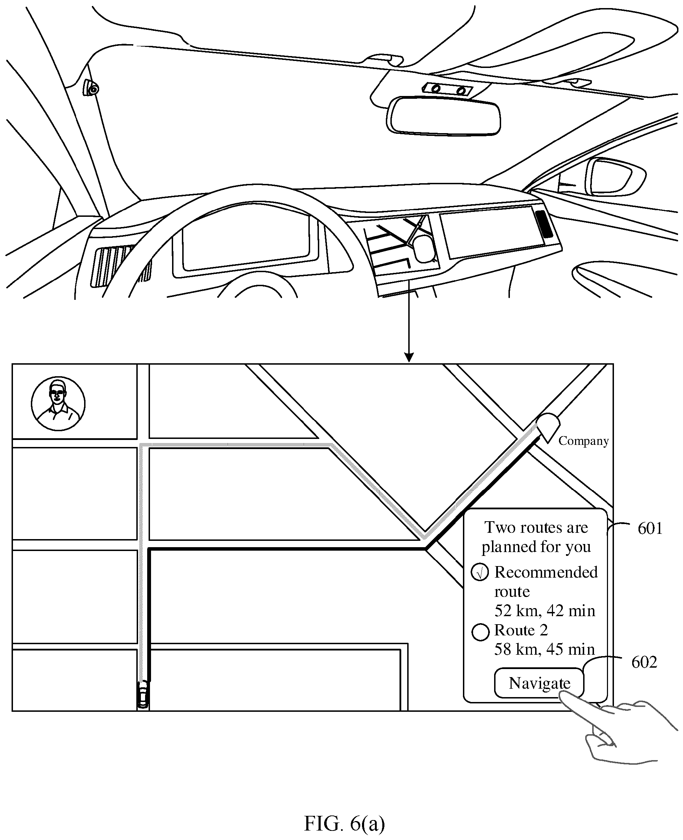

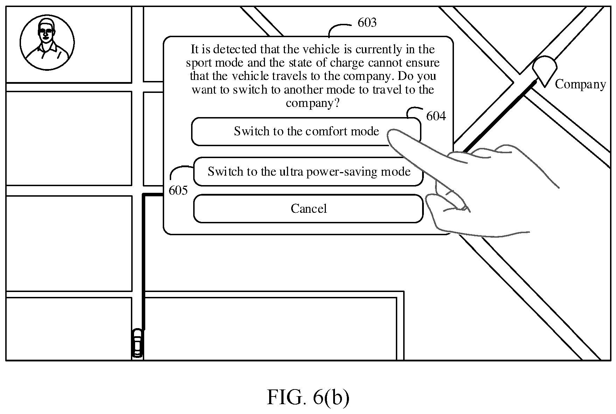

FIG. 6(a) and FIG. 6(b) show another group of GUIs according to an embodiment of this application.

As shown in FIG. 6(a), a vehicle may display a prompt box 601 through a large central display screen. The prompt box 601 includes a "Navigate" control 602 and a route that is planned by an in-vehicle map application for a user and that is from a current location of the vehicle to a company. For example, the in-vehicle map application plans two routes for the user, including a recommended route (a total distance from the current location to the company is 52 km and travel duration is 42 min) and a route 2 (a total distance from the current location to the company is 58 km and travel duration is 45 min).

As shown in FIG. 6(b), the vehicle may display information about the recommended route when detecting an operation of tapping the control 602 by the user. In this case, the vehicle may obtain information (for example, 52 km) about a target mileage of the vehicle from the current location to the company. The vehicle is in a sport mode, and a range corresponding to a state of charge (for example, 10%) of the vehicle in the sport mode is 30 km. The range in the sport mode is less than a first distance (for example, the first distance may be equal to the target mileage). Therefore, the vehicle may determine that the company cannot be reached through travel in the sport mode. The vehicle may compute a range in another mode. For example, modes of the vehicle include the sport mode, a comfort mode, and an ultra power-saving mode. The vehicle may compute a range in the comfort mode and a range in the ultra power-saving mode.

The comfort mode may be a mode that is more power-saving than the sport mode, and the ultra power-saving mode may be a mode that is more power-saving than the comfort mode.

A prompt box 603 may be displayed through a central display screen when a range corresponding to the state of charge of the vehicle in the comfort mode is 55 km and the range in the comfort mode is greater than the first distance and a range corresponding to the state of charge of the vehicle in the ultra power-saving mode is 65 km and the range in the ultra power-saving mode is greater than the first distance. The prompt box 603 includes prompt information "It is detected that the vehicle is currently in the sport mode and the state of charge cannot ensure that the vehicle travels to the company. Do you want to switch to the ultra power-saving mode?", a "Switch to the comfort mode" control 604, a "Switch to the ultra power-saving mode" control 605, and a "Cancel" control. When the vehicle detects an operation of tapping the control 604 by the user, the mode of the vehicle may be switched from the sport mode to the comfort mode.

In an embodiment of this application, when a range of the vehicle in a current mode is less than or equal to a first distance, the vehicle may compute a range of another mode that is more power-saving than the current mode. If ranges in a plurality of other modes are all greater than the first distance, the vehicle may prompt the user to switch to any one of the plurality of modes. This can provide more choice for the user, and can improve driving comfort of the user when avoiding a risk caused by an insufficient range to the user.

With reference to FIG. 6(a) and FIG. 6(b), the foregoing describes computing the range in the another mode that is more power-saving than the current mode, to prompt the user based on a relationship between the range in the another mode and the first distance. After the user chooses to switch to the comfort mode, the vehicle may further compute the range in the comfort mode in real time.

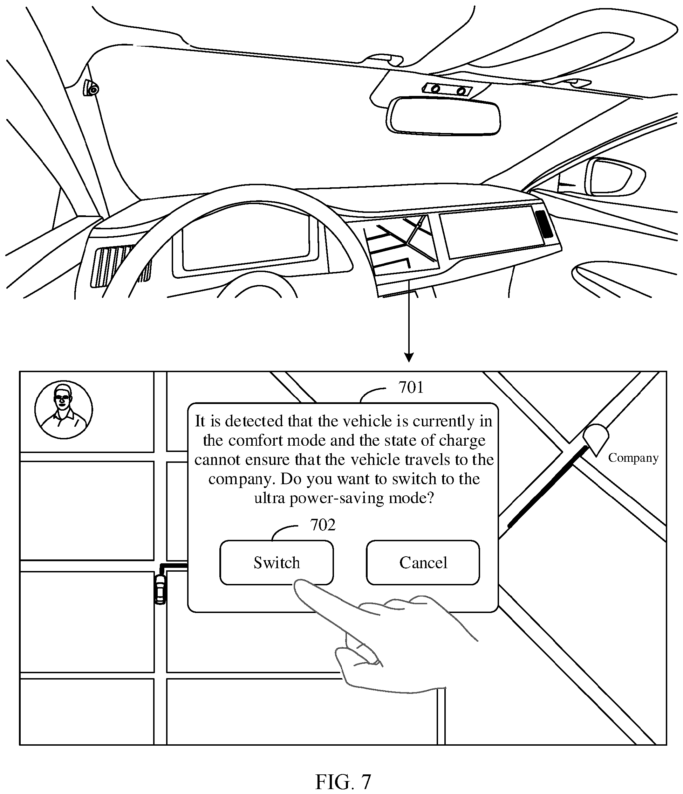

FIG. 7 shows another group of GUIs according to an embodiment of this application.

At a moment T₁, the target mileage of the vehicle is 52 km, and the vehicle obtains, through computation, that the range corresponding to the state of charge 10% in the comfort mode is 55 km and the range is greater than the first distance (for example, the first distance may be equal to the target mileage). In this case, the vehicle may determine that the vehicle can travel the company in the comfort mode.

Between the moment T₁ and a moment T₂, the user turns on a plurality of power-consuming devices when driving the vehicle in the comfort mode. As a result, power consumption during this period is greater than power consumption obtained before the moment T₁. At the moment T₂, the target mileage of the vehicle is 40 km, and the vehicle obtains, through computation, that a range corresponding to a state of charge 7% in the comfort mode is 35 km and the range is less than the first distance. However, a range corresponding to the state of charge 7% when the vehicle is in the ultra power-saving mode is 50 km and the range is greater than the first distance. In this case, the vehicle may display a prompt box 701. The prompt box 701 includes prompt information "It is detected that the vehicle is currently in the comfort mode and the state of charge cannot ensure that the vehicle travels to the company. Do you want to switch to the ultra power-saving mode?", a "Switch" control 702, and a "Cancel" control. When the vehicle detects an operation of tapping the control 702 by the user, the mode of the vehicle may be switched from the comfort mode to the ultra power-saving mode.

In embodiments of this application, after switching from the sport mode to the comfort mode, the vehicle can continue to detect a relationship between the range in the comfort mode and the first distance. In a travel process, due to a driving habit (for example, the user is accustomed to setting a temperature of air conditioning very low, or the user is accustomed to always keeping an atmosphere lamp on) of the user, the vehicle may determine that a travel task can be completed in the comfort mode at a previous moment but determine that the travel task cannot be completed in the comfort mode at a next moment. Consequently, the user is prompted in time to switch to the ultra power-saving mode that is more power-saving than the comfort mode. This helps further reduce a risk caused by an insufficient range, thereby helping improve the driving experience of the user.

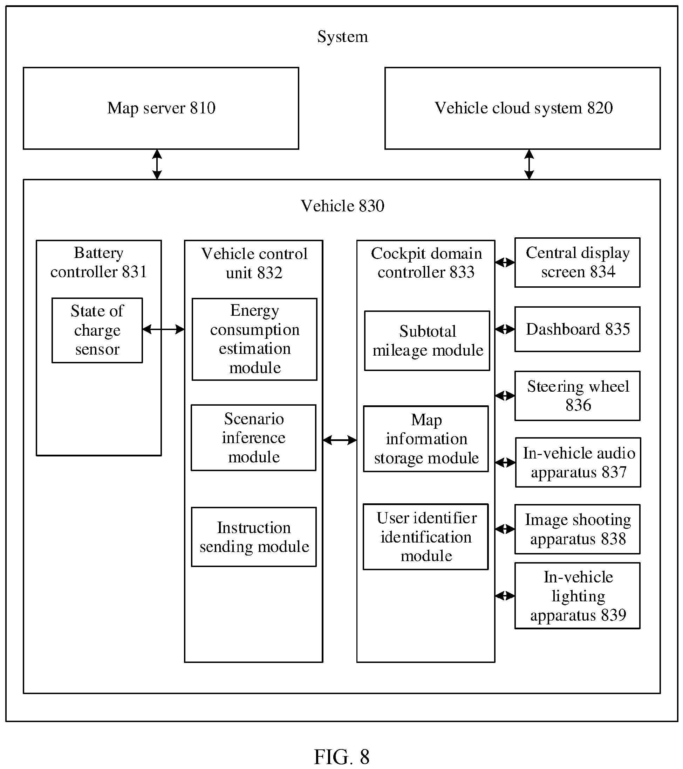

FIG. 8 is a diagram of a system architecture according to an embodiment of this application. As shown in FIG. 8, the system architecture includes a map server 810, a vehicle cloud system 820, and a vehicle 830. The vehicle 830 includes a battery controller 831, a vehicle control unit 832, a cockpit domain controller 833, a central display screen 834, a dashboard 835, a steering wheel 836, an in-vehicle audio apparatus 837 (for example, a sound box or a microphone), an image shooting apparatus 838, an in-vehicle lighting apparatus 839 (for example, an atmosphere lamp, a following spotlight), and the like. The battery controller 831 includes a state of charge sensor. The vehicle control unit includes an energy consumption estimation module, a scenario inference module and an instruction sending module. The cockpit domain controller includes a subtotal mileage module, a map information storage module and a user identifier identification module.

The vehicle control unit 832 may obtain information from apparatuses such as the cockpit domain controller 833 and the battery controller 831. The scenario inference module is configured to infer a travel scenario (for example, based on navigation information or a common route) of the user. The energy consumption estimation module may be configured to predict a range in the travel scenario, to determine whether to switch from the current mode to a mode that is more power-saving than the current mode. The instruction sending module is configured to: when the scenario inference module determines that mode switching is required, send, to the cockpit domain controller, an instruction used to prompt the user to perform mode switching.

The vehicle control unit 832 and the cockpit domain controller 833 may be located in a same apparatus. The battery controller 831 and the vehicle control unit 832 may be located in a same apparatus. Alternatively, the battery controller 831, the vehicle control unit 832, and the cockpit domain controller 833 may be located in a same apparatus.

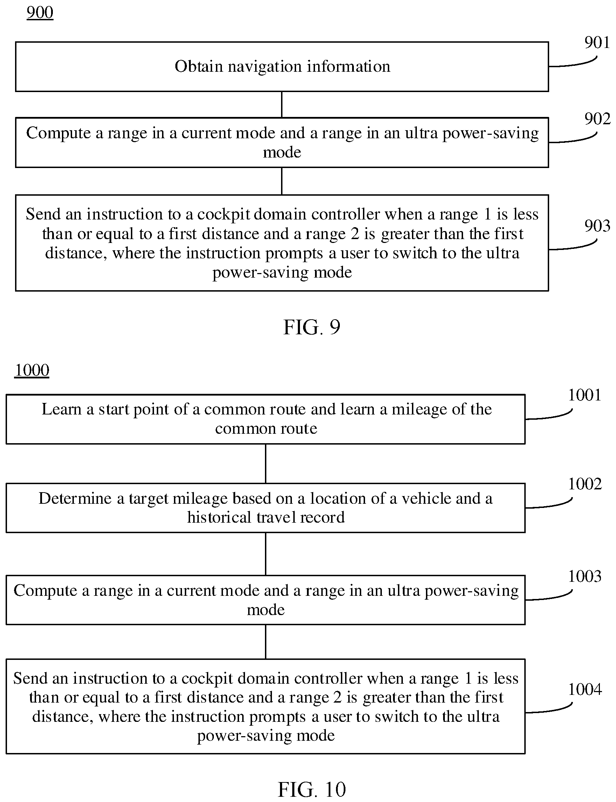

FIG. 9 is a schematic flowchart of a method 900 for determining whether to switch from a current mode to an ultra power-saving mode according to an embodiment of this application. As shown in FIG. 9, the method 900 includes the following steps.

S901: A scenario inference module obtains navigation information, where the navigation information includes information about a target mileage.

For example, the navigation information may be navigation information obtained by a vehicle from a map server. For example, the vehicle may send information about a destination to the map server after the vehicle detects that a user enters the information about the destination by using an in-vehicle navigation application. The map server may plan, based on the destination, one or more travel routes from a current location of the vehicle to the destination and a target mileage corresponding to each travel route. The map server may send, to the vehicle, the one or more travel routes and information about the target mileage corresponding to the travel route. In this way, the vehicle may display, through a central display screen, the one or more travel routes and the target mileage corresponding to each travel route. When it is detected that the user selects a travel route from the one or more travel routes, the scenario inference module may determine a target mileage based on the travel route.

S902: The energy consumption estimation module computes a range in the current mode and a range in the ultra power-saving mode.

For example, the vehicle control unit 832 may obtain information about a state of charge from the battery controller 831. The energy consumption estimation module in the vehicle control unit may estimate a range 1 in the current mode and a range 2 in the ultra power-saving mode based on the state of charge.

In an embodiment, the energy consumption estimation module may predict the range 1 in the current mode and the range 2 in the ultra power-saving mode based on an energy consumption situation in a current travel process.

For example, the energy consumption estimation module may predict the range 1 in the current mode and the range 2 in the ultra power-saving mode based on an estimation of 100 km that the vehicle most recently travels. For example, the 100 km that the vehicle most recently travels may be divided into sections, to separately compute energy consumption values during [0 km, 10 km), [10 km, 20 km), [20 km, 30 km), [30 km, 40 km), [40 km, 50 km), [50 km, 60 km), [60 km, 70 km), [70 km, 80 km), [80 km, 90 km), and [90 km, 100 km], and an average energy consumption value is computed based on these energy consumption values. The energy consumption estimation module may determine the range 1 in the current mode and the range 2 in the ultra power-saving mode based on the average energy consumption value of the 100 km that the vehicle most recently travels.

For another example, the energy consumption estimation module may alternatively compute a comprehensive energy consumption value of 100 km that the vehicle most recently travels. When the comprehensive energy consumption value is computed, weights of sections may be different. For example, a weight value of an energy consumption corresponding to each section in [0 km, 50 km) may be greater than a weight value of energy consumption corresponding to each section in [50 km, 100 km]. The energy consumption estimation module may determine the range 1 in the current mode and the range 2 in the ultra power-saving mode based on the comprehensive energy consumption value of the 100 km that the vehicle most recently travels.

In an embodiment, the energy consumption estimation module may predict the range 1 in the current mode and the range 2 in the ultra power-saving mode based on an energy consumption situation obtained when the vehicle previously travels on the route.

For example, the energy consumption estimation module may determine the range 1 in the current mode and the range 2 in the ultra power-saving mode based on an average energy consumption value obtained when the vehicle travels five previous times on the route.

In an embodiment, the energy consumption estimation module may alternatively predict the range 1 in the current mode and the range 2 in the ultra power-saving mode based on an average energy consumption in the current mode and an average energy consumption in the ultra power-saving mode. Average energy consumption in different modes may be obtained by adding average driving energy consumption per unit mileage and accessory power that are in the different modes. The average driving energy consumption per unit mileage may be read as a preset value based on test calibration data of the vehicle control unit in different modes and different working conditions (or a standard comprehensive working condition). The accessory energy consumption may be computed based on a sum of energy consumption of all working accessories (for example, power of accessories such as air conditioning, a central display screen, audio, lighting, and a seat) in the different modes.

It should be understood that there is no actual sequence between S901 and S902.

S903: When the range 1 is less than or equal to a first distance and the range 2 is greater than the first distance, the instruction sending module sends an instruction to the cockpit domain controller, where the instruction prompts the user to switch to the ultra power-saving mode.

The cockpit domain controller 833 is configured to control the central display screen 834, the dashboard 835, the steering wheel 836, the in-vehicle audio apparatus 837, the image shooting apparatus 838, and the in-vehicle lighting apparatus 839. For example, the cockpit domain controller 833 may receive an instruction sent by the vehicle control unit 832, to implement one or more of controlling the central display screen 834 to display prompt information for prompting the user to switch the mode, controlling the dashboard 835 to display prompt information for prompting the user to switch the mode, controlling the steering wheel 836 to vibrate, controlling the in-vehicle audio apparatus 837 to broadcast voice information for prompting the user to switch mode, and controlling the in-vehicle lighting apparatus 839 (for example, an atmosphere lamp) to change.

FIG. 10 is a schematic flowchart of a method 1000 for determining whether to switch from a current mode to an ultra power-saving mode according to an embodiment of this application. As shown in FIG. 10, the method 1000 includes the following steps.

S1001: An energy consumption estimation module learns a start point of a common route and learns a mileage of the common route.

In an embodiment, the energy consumption estimation module may obtain an identifier of a user from a user identifier identification module in the cockpit domain controller and obtain subtotal mileage information from a subtotal mileage module. The energy consumption estimation module may learn, based on the identifier of the user, information such as the start point, the mileage, and energy consumption of the common route.

For example, the energy consumption estimation module may store a historical travel record after learning. The historical travel record records a start location at which the user drives a vehicle each time and a mileage at which the user departs from the start location. For the historical travel record, refer to the historical travel records shown in Table 1 to Table 3. For brevity, details are not described herein again.

S1002: A scenario inference module determines a target mileage based on a location of the vehicle and the historical travel record.

For example, if a vehicle control unit 832 does not receive, in preset duration after the vehicle is powered on, information about a destination sent by the cockpit domain controller 833, the scenario recommendation module may obtain historical record information and information about the current location of the vehicle from the cockpit domain controller 833. The scenario inference module may determine the target mileage based on the historical record information and the information about the current location of the vehicle.

S1003: The energy consumption estimation module computes a range in the current mode and a range in the ultra power-saving mode.

S1004: When the range 1 is less than or equal to a first distance and the range 2 is greater than the first distance, an instruction sending module sends an instruction to the cockpit domain controller, where the instruction prompts the user to switch to the ultra power-saving mode.

For S1003 and S1004, refer to the descriptions of S902 and S903. For brevity, details are not described herein again.

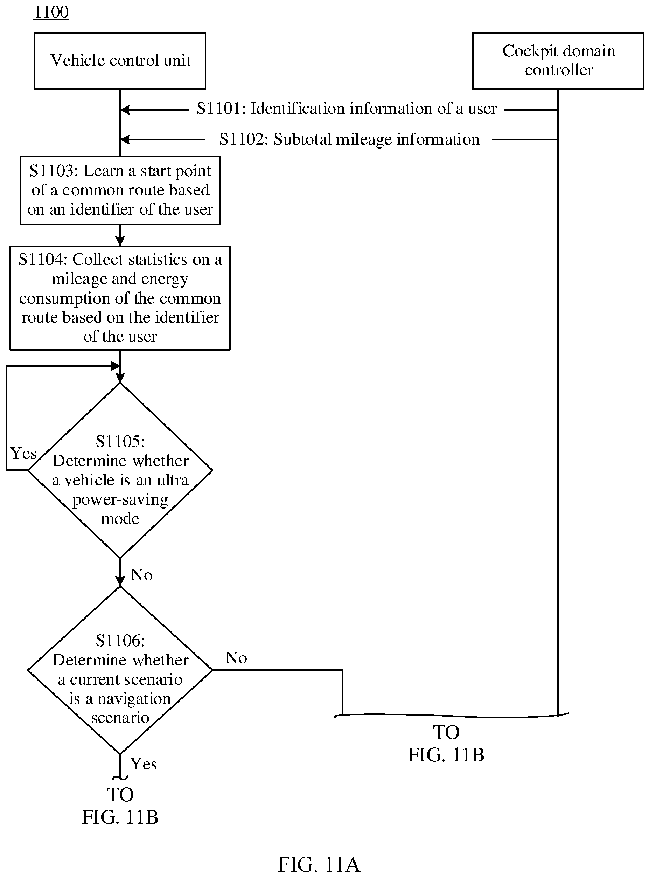

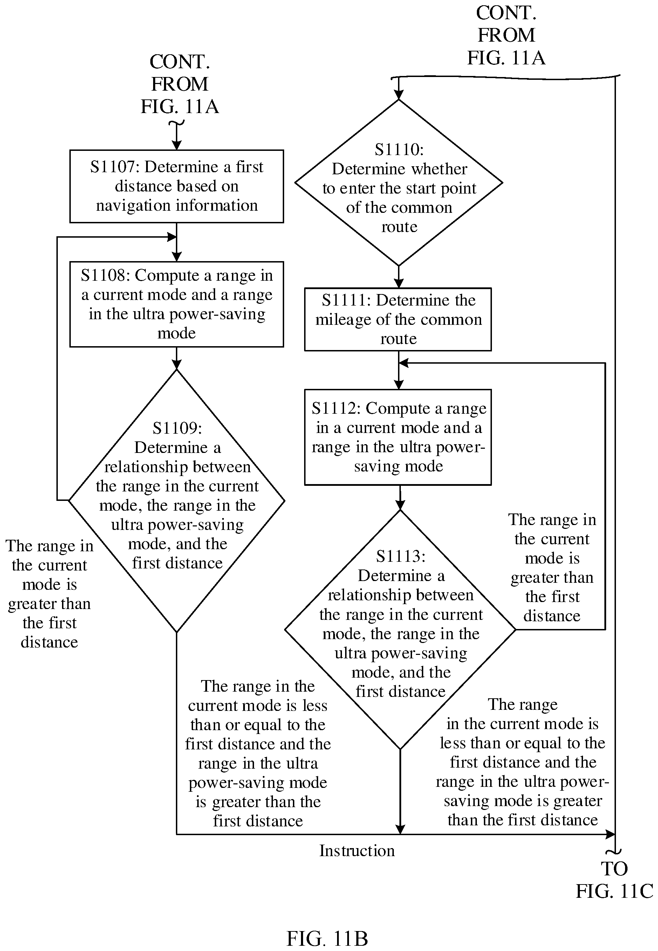

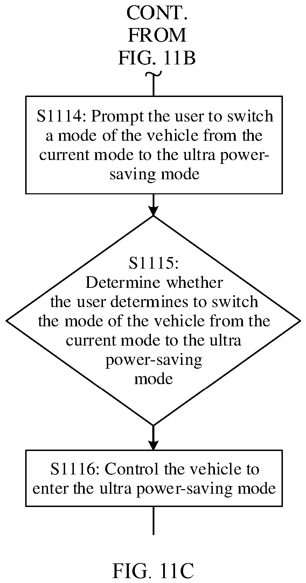

FIG. 11A to FIG. 11C are a schematic flowchart of a method 1000 for determining whether to switch from a current mode to an ultra power-saving mode according to an embodiment of this application. As shown in FIG. 11A to FIG. 11C, the method 1100 includes the following steps.

S1101: When detecting an operation of logging an account in on a vehicle by a user, a cockpit domain controller sends identification information of the user to a vehicle control unit.

For example, the identification information of the user may be an identity (identity, ID) of the user.

S1102: The cockpit domain controller sends subtotal mileage information to the vehicle control unit.

S1103: The vehicle control unit learns a start point of a common route based on an identifier of the user.

For example, the vehicle control unit may collect statistics on a start point of a common route of a user based on the subtotal mileage information and a start location. For example, the vehicle control unit obtains a start time period and the start location in the subtotal mileage information. When there are more than five departures from a same location in a same time period, the location may be recorded as the start point of the common route.

S1104: The vehicle control unit collects statistics on a mileage and energy consumption of the common route based on the identifier of the user.

For example, statistics are collected on the mileage and the energy consumption of the common route by using a mileage and energy consumption in the subtotal mileage information detected and fed back by the cockpit domain controller in real time. In addition, the vehicle control unit associates the statistical information with the identifier of the user and the current mode of the vehicle, to obtain a mileage of a common route of a user through statistics collection.

S1105: The vehicle control unit determines whether the vehicle is already in the ultra power-saving mode.

The vehicle control unit returns to S1105 for determining if the vehicle control unit determines that the vehicle is already in the ultra power-saving mode.

S1106: If the vehicle control unit determines that the vehicle is not in the ultra power-saving mode, the vehicle control unit determines whether a current scenario is a navigation scenario.

Optionally, before determining whether the vehicle is currently in the navigation scenario, the vehicle control unit may first determine whether a state of charge is less than or equal to a first state of charge threshold.

For example, the first state of charge threshold may be 80%. If the vehicle control unit determines that the current state of charge of the vehicle is less than or equal to 80%, the vehicle control unit may perform S1106. If the vehicle control unit determines that the current state of charge of the vehicle is greater than 80%, the vehicle control unit may return to S1105 for determining. In this way, resource overheads of the vehicle can be reduced, to help reduce power consumption of the vehicle.

Optionally, before determining whether the vehicle is currently in the navigation scenario, the vehicle control unit may first determine whether a state of charge is less than or equal to a second state of charge threshold.

For example, the second state of charge threshold may be 10%. If the vehicle control unit determines that the current state of charge of the vehicle is greater than 10%, the vehicle control unit may perform S1106. If the vehicle control unit determines that the current state of charge of the vehicle is less than or equal to 10%, the vehicle control unit may control the vehicle to directly enter the ultra power-saving mode. In this way, when the state of charge is less than or equal to 10%, the vehicle can be controlled to directly enter the ultra power-saving mode. This further reduces a risk caused by an insufficient range to the user, thereby helping improve driving experience of the user.

If the current scenario is the navigation scenario, the vehicle control unit may continue to perform S1107 to S1109. If the current scenario is a non-navigation scenario, the vehicle control unit may perform S1110 to S1113.

The vehicle control unit may determine, based on whether the cockpit domain controller feeds back the information about the destination to the vehicle control unit. For example, if the cockpit domain controller detects, via a central display screen, an operation of entering a destination 1 by the user, or obtains, via an in-vehicle audio apparatus, a voice instruction indicating to navigate to a destination 1, the cockpit domain controller may send information about the destination 1 to the vehicle control unit. In this way, the vehicle control unit may determine that the current scenario is the navigation scenario.

S1107: The vehicle control unit determines a first distance based on navigation information, where the navigation information includes the information about the destination.

In an embodiment, the determining a first distance based on navigation information includes: determining a target mileage based on the destination; and determining the first distance based on the target mileage.

For example, the destination may be a destination entered by the user and detected by the cockpit domain controller via the central display screen. In this way, the cockpit domain controller may send the information about the destination to the vehicle control unit. Alternatively, the destination may be identified in voice information obtained by the in-vehicle audio apparatus. In this way, the cockpit domain controller may send the information about the destination to the vehicle control unit. Alternatively, the information about the destination may be sent to the vehicle control unit by an electronic device (for example, a mobile phone or a smartwatch). Alternatively, the information about the destination may be sent to the cockpit domain controller by an electronic device, and is sent to the vehicle control unit by the cockpit domain controller.

For the foregoing manner of determining the first distance based on the target mileage, refer to the descriptions in the foregoing embodiment. For brevity, details are not described herein again.

S1108: The vehicle control unit computes a range in the current mode and a range in the ultra power-saving mode.

Before computing the range in the current mode and the range in the ultra power-saving mode, the vehicle control unit may obtain information about the state of charge from the battery controller.

For a process in which the vehicle control unit computes the range in the current mode and the range in the ultra power-saving mode in S1108, refer to the descriptions in the foregoing embodiment. For brevity, details are not described herein again.

S1109: The vehicle control unit determines a relationship between the range in the current mode, a range in the ultra power-saving mode, and the first distance.

The vehicle control unit may send an instruction to the cockpit domain controller if the range in the current mode is less than or equal to the first distance and the range in the ultra power-saving mode is greater than the first distance. The instruction prompts the user to switch a mode of the vehicle from the current mode to the ultra power-saving mode.

If the range in the current mode is greater than the first distance, the vehicle control unit may return to continue to perform S1108.

If both the range in the current mode and the range in the ultra power-saving mode are less than or equal to the first distance, the vehicle control unit may directly switch a mode of the vehicle from the current mode to the ultra power-saving mode, and/or send an instruction to the cockpit domain controller. The instruction indicates, to the user, that the range is insufficient or prompts the user to find a charging pile and charge the vehicle in time.

S1110: The vehicle control unit determines whether to enter the start point of the common route.

In an embodiment, when there is no navigation information, the vehicle control unit may determine, based on the start point of the common route learned in S1103, whether to enter the start point of the common route.

For example, the vehicle control unit may obtain a current location of the vehicle from the cockpit domain controller, and determine whether the current location is the start time period and the start location of the common route recorded in S1103.

S1111: The vehicle control unit determines a mileage of the common route.

For example, when determining that the vehicle is currently at a start point of a common route, the vehicle control unit may determine a target mileage based on the mileage of the common route obtained through statistics collection in S1104, to determine a first distance based on the target mileage.

S1112: The vehicle control unit computes a range in the current mode and a range in the ultra power-saving mode.

S1113: The vehicle control unit determines a relationship between the range in the current mode, a range in the ultra power-saving mode, and the first distance.

For a process in which the vehicle control unit computes the range in the current mode and the range in the ultra power-saving mode and a process in which the vehicle control unit determines relationships between the range in the current mode, the range in the ultra power-saving mode, the first distance in S1112 and S1113, refer to the descriptions in the foregoing embodiment. For brevity, details are not described herein again.

S1114: The cockpit domain controller prompts, according to a received instruction, the user to switch the mode of the vehicle from the current mode to the ultra power-saving mode.

For example, a prompt manner of the cockpit domain controller includes but is not limited to one or more of the following:
(1) A central display screen displays a prompt box;
(2) a dashboard displays prompt information;
(3) the user is prompted by voice to switch to the ultra power-saving mode;
(4) a color of an atmosphere lamp changes;
(5) a steering wheel vibrates; and
(6) a camera is enabled.

For example, (3) and (6) in the foregoing prompt manners may be combined. For example, after receiving the instruction sent by the vehicle control unit, the cockpit controller may control a DMS to start and control an in-vehicle audio apparatus to send voice information "The current range cannot reach the destination. Switch to the ultra power-saving mode". When it is identified, by using an image collected by the DMS, that a user in a driver area nods, it may be determined that the user agrees to switch the mode of the vehicle to the ultra power-saving mode. This can control to switch the mode from the current mode to the ultra power-saving mode.

S1115: The cockpit domain controller determines whether the user determines to switch the mode of the vehicle from the current mode to the ultra power-saving mode.

For example, when an operation of tapping a "Switch" control by the user via the central display screen is detected, or when the voice information of the user indicating to switch to the ultra power-saving mode is detected, it may alternatively be determined that the user switches the mode of the vehicle from the current mode to the ultra power-saving mode.

For example, if the cockpit domain controller does not detect an operation of switching the mode of the vehicle by the user from the current mode to the ultra power-saving mode, the vehicle may continue to stay in the current mode.

S1116: Control the vehicle to enter the ultra power-saving mode.

Controlling the vehicle to enter the ultra power-saving mode in S1116 may be performed by the cockpit domain controller, or may be performed by the entire vehicle control unit. This is not limited in embodiments of this application.

The technical solutions in embodiments of this application may alternatively be performed by a server (for example, the vehicle cloud system 820). For example, the server may obtain, in real time, information that is sent by a vehicle and that is about a target mileage, a state of charge, and a first mode that the vehicle is currently in, to obtain, through computation based on the information about the state of charge (or information about the state of charge and historical energy consumption of the vehicle), a range in the first mode and a range in the second mode. The server may send prompt information to the vehicle when the range in the first mode is less than or equal to the first distance and the range in the second mode is greater than the first distance. The prompt prompts the user to switch a mode of the vehicle from the first mode to the second mode. The server has a stronger computing capability, and stores more data amounts and more types of data. In this way, a computation result can be more accurate. This helps further reduce a risk caused by an insufficient range, thereby helping improve driving experience of the user.

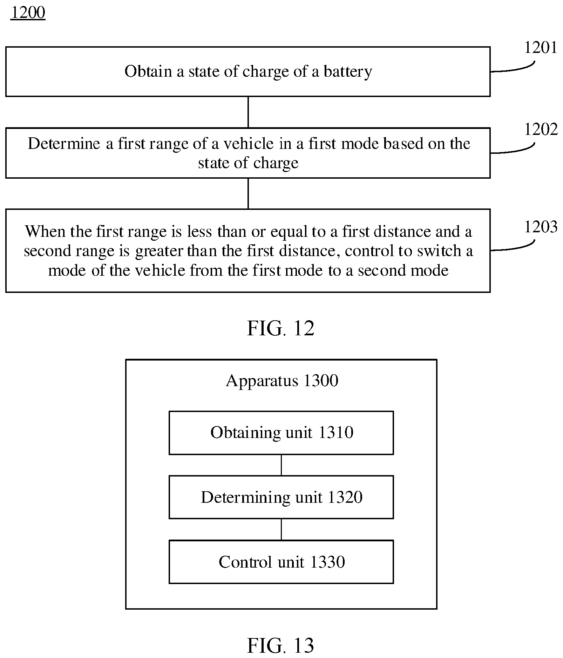

FIG. 12 is a schematic flowchart of a control method 1200 according to an embodiment of this application. The method 1200 may be performed by a control apparatus. When the control apparatus is located in a vehicle, the control apparatus may be the foregoing vehicle control unit; the control apparatus may be a system including a vehicle control unit and a cockpit domain controller; the control apparatus may be a system including a vehicle control unit and a battery controller; or the control apparatus may be a system including a battery controller, a vehicle control unit, and a cockpit domain controller. Alternatively, the control apparatus may alternatively be located in an electronic device (for example, a mobile phone) or a server. As shown in FIG. 12, the method 1200 includes the following steps.

S1201: The control apparatus obtains a state of charge of a battery.

For example, if the control apparatus is a vehicle control unit, the vehicle control unit may obtain the state of charge of the battery from a battery controller.

For example, if the control apparatus is a system including a vehicle control unit and a cockpit domain controller, the system may obtain the state of charge of a battery from the battery controller.

For example, the system may further include a battery controller, and the system may obtain the state of charge from the battery controller included in the system.

For example, if the control apparatus is an electronic device, the electronic device may obtain information about the state of charge from a vehicle (for example, a battery controller of the vehicle).

For example, if the control apparatus is a server, the server may obtain information about the state of charge from a vehicle (for example, a battery controller of the vehicle).

S1202: The control apparatus determines a first range of the vehicle in the first mode based on the state of charge.

For example, the control apparatus may store information about conversion relationships or functions between the state of charge and a range in different modes, to determine the first range in the first mode and a second range in a second mode based on the state of charge.

In an embodiment, the control apparatus may further determine ranges of the vehicle in the different modes based on the state of charge and energy consumption information stored in a historical travel record.

For example, after it is determined that a travel route of the vehicle is from a location A to a location B, the vehicle may obtain, from the historical travel record, energy consumption of the vehicle from the location A to the location B in the different modes. For example, the vehicle travels 10 times in total from the location A to the location B, traveling five times in the first mode and traveling five times in the second mode. In this case, the vehicle control unit may predict the first range based on the state of charge and energy consumption obtained during the five travels in the first mode, and predict the second range based on the state of charge and energy consumption obtained during the five travels in the second mode.

In an embodiment, the power consumption information stored in the historical travel record may further include power consumption information of the vehicle obtained in a latest travel distance (for example, 100 km) before a current travel. The vehicle may predict the first range and the second range based on the power consumption information obtained in the latest travel distance.

S1203: When the first range is less than or equal to a first distance and the second range is greater than the first distance, control to switch a mode of the vehicle from the first mode to the second mode, where the first distance is determined based on the target mileage of the vehicle, and the second range is a range corresponding to the state of charge of the vehicle in the second mode.

The first range in the first mode may be understood as a maximum mileage that the vehicle can travel in the first mode. The second range may be understood as a maximum mileage that the vehicle can travel in the second mode. The target range may be understood as a mileage that the vehicle is to travel, or may be understood as a mileage that the vehicle still needs to travel from a current location to a destination.

In an embodiment, the control apparatus may further determine, based on a difference between the second range and the first distance, to switch to the second mode.

For example, if the difference between the second range and the first distance is greater than or equal to the preset difference, the second mode may be a sub-mode 1 in an ECO mode or a power-saving mode. Alternatively, if the difference between the second range and the first distance is less than a preset difference, the second mode may be a sub-mode 2 in an ECO mode or a power-saving mode. The sub-mode 2 may be a mode that is more power-saving than the sub-mode 1. For example, in the sub-mode 1, air conditioning or an atmosphere lamp may be allowed to be used. In the sub-mode 2, air conditioning or an atmosphere lamp cannot be used.

Optionally, the method further includes: when an operation of entering the destination by a user is detected, determining the first distance based on the destination; or receiving information about the destination sent by the electronic device, and determining the first distance based on the destination.

For example, as shown in FIG. 2(b) in, in response to detecting an operation of tapping a control 20152 by the user, the control apparatus may obtain that the destination is a company. The control apparatus may request, from a map server based on the destination, one or more routes navigating to the company. After receiving information that is sent by the map server and that is about the one or more routes navigating to the company, the control apparatus may control a central display screen to display the one or more routes and prompt the user to select one of the one or more routes. The control apparatus may determine the target mileage in response to detecting an operation of selecting the route from the one or more routes the user. Alternatively, the control apparatus may recommend, to the user based on map information locally stored in the vehicle, one or more routes navigating to the company.

For example, as shown in FIG. 5(b)-1 and FIG. 5(b)-2, in response to detecting an operation of tapping an icon of a head unit by the user, the mobile phone may send, to the vehicle, information about the destination being a restaurant A and information about the recommended route. In response to receiving the information sent by the mobile phone, the control may determine that the destination is the restaurant A and the target mileage.

Optionally, the method further includes: obtaining a first location of the vehicle; determining, based on the historical travel record, one or more mileages that the vehicle is to travel when departing from the first location; and determining the first distance based on the one or more mileages.

For example, the control apparatus may obtain that the vehicle is currently at a location A, and that there are 30 mileages that the vehicle travels when departing from the location A in the historical travel record, including 25 mileages that are [28 km, 30 km], three mileages that are [50 km, 55 km], and two mileages that are [5 km, 10 km]. In this case, the control apparatus may use an average value (for example, 29 km) of the 25 mileages are the target mileage, to determine the first distance based on the target mileage.

Optionally, the determining, based on the historical travel record, one or more mileages that the vehicle is to travel when departing from the first location includes: determining, based on the historical travel record, the one or more mileages that the vehicle is to travel when departing from the first location in a preset time period.

For example, with reference to the historical travel records shown in Table 1 and Table 2, the foregoing describes how to determine the one or more mileages that the vehicle is to travel when departing from the location in the preset time period. Details are not described herein again.

Optionally, the determining the first distance based on the one or more mileages includes: determining the first distance based on identity information of a driver and the one or more mileages.

For example, with reference to the historical travel record shown in Table 3, the foregoing describes determining the first distance based on the identity information of the driver and the one or more mileages. Details are not described herein again.

Optionally, before the determining the first distance based on the one or more mileages, the method further includes: detecting that the user does not start a map application in preset duration; or detecting that the user does not enter the destination in preset duration.

For example, a timer (for example, duration of the timer may be 3 min) may be started after the vehicle is powered on. When the timer expires, the vehicle does not detect that the user starts the map application, or the user starts the map application but does not indicate the destination. In this case, the vehicle may determine the first distance based on the one or more mileages.

Optionally, the method further includes: determining that the state of charge is less than or equal to a preset battery level threshold.

In embodiments of this application, when the state of charge is greater than the preset battery level threshold, the vehicle may keep traveling in a current mode. When the state of charge is less than or equal to the preset battery level threshold, the vehicle may compare the range in the first mode and the range in the second mode with the first distance. In this way, resource overheads of the vehicle can be reduced, to help reduce power consumption of the vehicle.

For example, the preset battery level threshold is a first state of charge threshold. The first state of charge threshold is 80%.

Optionally, the method further includes: when the first range is less than or equal to the first distance and the second range is greater than the first distance, controlling a prompt apparatus to prompt the user to switch the mode of the vehicle from the first mode to the second mode. The controlling to switch a mode of the vehicle from the first mode to the second mode includes: when an operation of switching the mode of the vehicle from the first mode to the second mode by the user is detected, controlling to switch the mode of the vehicle from the first mode to the second mode.

For example, as shown in FIG. 2(d), when detecting an operation of tapping a control 206 by the user, the control apparatus may control the vehicle to switch from the first mode to the second mode.

For example, as shown in FIG. 3(d), when detecting an operation of tapping a control 305 by the user, the control apparatus may control the vehicle to switch from the first mode to the second mode.

Optionally, the second mode is a mode that is more power-saving than the first mode.

Optionally, the first mode is a non-ECO mode or a non-power-saving mode (for example, the first mode may be a sport mode or a comfort mode), and the second mode is the ECO mode or the power-saving mode.

Optionally, the first mode and the second mode may alternatively be different sub-modes of a mode.

For example, the first mode is the sub-mode 1 in the power-saving mode, and the second mode is the sub-mode 2 in the power-saving mode. For example, in the sub-mode 1, the air conditioning or the atmosphere lamp can be allowed to be used. In the sub-mode 2, the air conditioning or the atmosphere lamp cannot be used.

Optionally, the first mode and the second mode may alternatively be user-defined modes.

For example, the user may set a type of a power-consuming device allowed to be used in the first mode and the second mode. For example, the user may set that, in the first mode, the air conditioning, the atmosphere lamp, and a backseat entertainment screen may be used, and the user may set that, in the second mode, a backseat entertainment screen may be used, but the air conditioning and the atmosphere lamp cannot be used.

For another example, the user may set speed limit values of the vehicle in the first mode and the second mode. For example, the user may set the speed limit value in the first mode to 90 km/h, and may set the speed limit value in the second mode to 60 km/h.

In an embodiment, the control apparatus may further prompt the user based on the difference between the second range and the first distance.

For example, if the difference between the second range and the first distance is greater than or equal to the preset difference, the control apparatus may control the central display screen to display the prompt information. The prompt information prompts the user to switch the mode of the vehicle from the first mode to the second mode. Alternatively, if the difference between the second range and the first distance is less than the preset difference, the control apparatus may control the central display screen to display the prompt information and control a steering wheel to vibrate.

In an embodiment, in addition to controlling the prompt apparatus to prompt the user to switch the mode of the vehicle from the first mode to the second mode, the control apparatus may further control the prompt apparatus to prompt the user to charge the vehicle in time if the user wants to continue to control the vehicle to travel in the first mode.

In an embodiment, the control apparatus may further control the prompt apparatus to remind the user of a risk that the destination may not be reached and prompt the user to charge the vehicle in time, or may further prompt the user of a location of a charging pile closest to the vehicle.

In an embodiment, after switching from the first mode to the second mode, if it is detected that the user charges the vehicle, and after charging, both the ranges corresponding to the state of charge in the first mode and the second mode are greater than or equal to a second distance, the control apparatus may further control the prompt apparatus to prompt the user to switch back from the second mode to the first mode. The second distance may be determined based on the target mileage between the location of the vehicle and the destination. In this way, when the range corresponding to the state of charge in the first mode is greater than the second distance, the user can be prompted in time to switch back to the first mode with better driving experience. This helps improve driving experience of the user.

An embodiment of this application further provides an apparatus configured to implement any one of the foregoing methods, for example, provides an apparatus including a vehicle control unit configured to implement any one of the foregoing methods, a system including a vehicle control unit and a cockpit domain controller, a system including a vehicle control unit and a battery controller, a system including a battery controller, a vehicle control unit, and a cockpit domain controller, an electronic device, or a server including a unit (or means) for performing each step.

FIG. 13 is a block diagram of a control apparatus 1300 according to an embodiment of this application. As shown in FIG. 13, the apparatus 1300 includes: an obtaining unit 1310, configured to obtain a state of charge of a battery; a determining unit 1320, configured to determine a first range of a vehicle in a first mode based on the state of charge; and a control unit 1330, configured to: when the first range is less than or equal to a first distance and a second range is greater than the first distance, control to switch a mode of the vehicle from the first mode to a second mode. The first distance is determined based on a target mileage of the vehicle, and the second range is a range corresponding to the state of charge of the vehicle in the second mode.

Optionally, the apparatus further includes a detecting unit. The determining unit 1320 is specifically configured to: when the detection unit detects an operation of entering a destination by a user, determine the first distance based on the destination. Alternatively, the apparatus further includes a receiving unit. The determining unit 1320 is specifically configured to: when the receiving unit receives information about a destination sent by an electronic device, determine the first distance based on the destination.

Optionally, the obtaining unit 1310 is further configured to obtain a first location of the vehicle. The determining unit 1320 is further configured to determine, based on a historical travel record, one or more mileages that the vehicle is to travel when departing from the first location. The determining unit 1320 is further configured to determine the first distance based on the one or more mileages.

Optionally, the determining unit 1320 is specifically configured to determine, based on the historical travel record, the one or more mileages that the vehicle is to travel when departing from the first location in a preset time period.

Optionally, the determining unit 1320 is specifically configured to determine the first distance based on identity information of a driver and the one or more mileages.

Optionally, the determining unit 1320 is further configured to determine that the state of charge is less than or equal to a preset battery level threshold.

Optionally, the control unit 1330 is specifically configured to: when the first range is less than or equal to the first distance and the second range is greater than the first distance, control a prompt apparatus to prompt the user to switch the mode of the vehicle from the first mode to the second mode; and when an operation of switching the mode of the vehicle from the first mode to the second mode by the user is detected, control to switch the mode of the vehicle from the first mode to the second mode.

Optionally, the second mode is a mode that is more power-saving than the first mode.

It should be understood that division into the units of the foregoing apparatus is merely logical function division. During actual implementation, all or some of the units may be integrated into a physical entity, or may be physically separated. In addition, the units in the apparatus may be implemented in a form of invoking software by a processor. For example, the apparatus includes the processor. The processor is connected to a memory. The memory stores instructions. The processor invokes the instructions stored in the memory, to implement any one of the foregoing methods or implement a function of each unit of the apparatus. For example, the processor is a general-purpose processor, for example, a CPU or a microprocessor. The memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC. Functions of some or all of the foregoing units are implemented by designing a logical relationship between elements in the circuit. For another example, in another implementation, the hardware circuit may be implemented by a PLD. An FPGA is used as an example. The FPGA may include a large quantity of logic gate circuits. A configuration file is used to configure a connection relationship between the logic gate circuits, to implement functions of some or all of the units. All the units of the apparatus may be implemented in the form of invoking the software by the processor, or may be implemented in the form of the hardware circuit, or some of the units may be implemented in the form of invoking the software by the processor, and a remaining part may be implemented in the form of the hardware circuit.

In embodiments of this application, the processor is a circuit that has a signal processing capability. In an implementation, the processor may be a circuit that has an instruction reading and running capability, for example, a CPU, a microprocessor, a GPU, or a DSP. In another implementation, the processor may implement a function by using the logical relationship of the hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement configuration of the hardware circuit may be understood as a process in which the processor loads instructions to implement functions of some or all of the foregoing units. In addition, the processor may alternatively be a hardware circuit designed for artificial intelligence, and may be understood as an ASIC, for example, an NPU, a TPU, or a DPU.

It can be learned that each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated, or may be implemented independently. In an implementation, these units are integrated and implemented in a form of a SOC. The SOC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, or a CPU and a GPU.

An embodiment of this application further provides an apparatus. The apparatus includes a processing unit and a storage unit. The storage unit is configured to store instructions. The processing unit executes the instructions stored in the storage unit, to enable the apparatus to perform the method or steps performed in the foregoing embodiment.

Optionally, if the apparatus is located in a vehicle, the processing unit may be the processors 151 to 15n shown in FIG. 1.

An embodiment of this application further provides a transport means. The transport vehicle may include the foregoing apparatus.

Optionally, the transport means may be a vehicle.

An embodiment of this application further provides a computer program product. The computer program product includes computer program code. When the computer program code is run on a computer, the computer is enabled to perform the foregoing methods.

An embodiment of this application further provides a computer-readable medium. The computer-readable medium stores program code. When the computer program code is run on a computer, the computer is enabled to perform the foregoing methods.

In an implementation process, steps in the foregoing methods can be implemented by using a hardware integrated logical circuit in the processor, or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory. The processor reads information in the memory, and completes the steps in the foregoing methods in combination with hardware of the processor. To avoid repetition, details are not described herein again.

It should be understood that, in embodiments of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

The functions may be stored in a computer-readable storage medium, when the functions are implemented in a form of a software functional unit and sold or used as an independent product. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining a state of charge of a battery;
determining a first range of a vehicle in a first mode based on the state of charge; and
when the first range is less than or equal to a first distance and a second range is greater than the first distance, controlling to switch a mode of the vehicle from the first mode to a second mode, wherein
the first distance is determined based on a target mileage of the vehicle, and the second range is a range corresponding to the state of charge of the vehicle in the second mode.

2. The method according to claim 1, wherein the method further comprises:
when an operation of entering a destination by a user is detected, determining the first distance based on the destination; or
receiving information about a destination sent by an electronic device, and determining the first distance based on the destination.

3. The method according to claim 1, wherein the method further comprises:
obtaining a first location of the vehicle;
determining, based on a historical travel record, one or more mileages that the vehicle is to travel when departing from the first location; and
determining the first distance based on the one or more mileages.

4. The method according to claim 3, wherein the determining, based on a historical travel record, one or more mileages that the vehicle is to travel when departing from the first location comprises:
determining, based on the historical travel record, the one or more mileages that the vehicle is to travel when departing from the first location in a preset time period.

5. The method according to claim 3 or 4, wherein the determining the first distance based on the one or more mileages comprises:
determining the first distance based on identity information of a driver and the one or more mileages.

6. The method according to any one of claims 1 to 5, wherein the method further comprises:
determining that the state of charge is less than or equal to a preset battery level threshold.

7. The method according to any one of claims 1 to 6, wherein the method further comprises:
when the first range is less than or equal to the first distance and the second range is greater than the first distance, controlling a prompt apparatus to prompt the user to switch the mode of the vehicle from the first mode to the second mode; and
the controlling to switch a mode of the vehicle from the first mode to a second mode comprises:
when an operation of switching the mode of the vehicle from the first mode to the second mode by the user is detected, controlling to switch the mode of the vehicle from the first mode to the second mode.

8. The method according to any one of claims 1 to 7, wherein the second mode is a mode that is more power-saving than the first mode.

9. A control apparatus, comprising:
an obtaining unit, configured to obtain a state of charge of a battery;
a determining unit, configured to determine a first range of a vehicle in a first mode based on the state of charge; and
a control unit, configured to: when the first range is less than or equal to a first distance and a second range is greater than the first distance, control to switch a mode of the vehicle from the first mode to a second mode, wherein
the first distance is determined based on a target mileage of the vehicle, and the second range is a range corresponding to the state of charge of the vehicle in the second mode.

10. The apparatus according to claim 9, wherein the apparatus further comprises a detection unit, and the determining unit is specifically configured to: when the detection unit detects an operation of entering a destination by a user, determine the first distance based on the destination; or
the apparatus further comprises a receiving unit, and the determining unit is specifically configured to: when the receiving unit receives information about a destination sent by an electronic device, determine the first distance based on the destination.

11. The apparatus according to claim 9, wherein
the obtaining unit is further configured to obtain a first location of the vehicle;
the determining unit is further configured to determine, based on a historical travel record, one or more mileages that the vehicle is to travel when departing from the first location; and
the determining unit is further configured to determine the first distance based on the one or more mileages.

12. The apparatus according to claim 11, wherein the determining unit is specifically configured to:
determine, based on the historical travel record, the one or more mileages that the vehicle is to travel when departing from the first location in a preset time period.

13. The apparatus according to claim 11 or 12, wherein the determining unit is specifically configured to:
determine the first distance based on identity information of a driver and the one or more mileages.

14. The apparatus according to any one of claims 9 to 13, wherein
the determining unit is further configured to determine that the state of charge is less than or equal to a preset battery level threshold.

15. The apparatus according to any one of claims 9 to 14, wherein the control unit is specifically configured to:
when the first range is less than or equal to the first distance and the second range is greater than the first distance, control a prompt apparatus to prompt the user to switch the mode of the vehicle from the first mode to the second mode; and
when an operation of switching the mode of the vehicle from the first mode to the second mode by the user is detected, control to switch the mode of the vehicle from the first mode to the second mode.

16. The apparatus according to any one of claims 9 to 15, wherein the second mode is a mode that is more power-saving than the first mode.

17. A control apparatus, wherein the apparatus comprises:
a memory, configured to store a computer program; and
a processor, configured to execute the computer program stored in the memory, to enable the apparatus to perform the method according to any one of claims 1 to 8.

18. A vehicle, comprising the apparatus according to any one of claims 9 to 17.

19. A computer-readable storage medium, wherein the computer-readable storage medium stores a computer program, and when the computer program is executed by a computer, the method according to any one of claims 1 to 8 is implemented.

20. A chip, wherein the chip comprises a processor and a data interface, and the processor reads, through the data interface, instructions stored in a memory, to perform the method according to any one of claims 1 to 8.
